# EUROPEAN PATENT APPLICATION

(11) **EP 1 396 781 A2**
(43) Date of publication of application: **10.03.2004**
(21) Application number: 03020114.9
(22) Date of filing: 04.09.2003
(51) Int. Cl.: G06F 3/00

(54) **Display system, display control apparatus, display apparatus, display method and user interface device**

(30) Priority: 05.09.2002 JP 2002259967; 09.09.2002 JP 2002263413; 22.08.2003 JP 2003299392; 02.09.2003 JP 2003310780
(71) Applicant: Sony Computer Entertainment Inc., Tokyo 107-0062 (JP)
(72) Inventor: Suzuki, Akira, Sony Computer Entertainment Inc., Tokyo 107-0062 (JP)
(74) Representative: Müller - Hoffmann & Partner

(57) **Abstract**

Image data represented in such a manner as to enclose and surround a user are displayed in a manner such that the image data are divided among a plurality of display apparatus (30) that surround the user. A display control apparatus (100) acquires information indicative of positions of the respective display apparatuses (30) from position sensors (32), generates images that must be seen in the direction from the user and causes each of the display apparatuses (30) to display the generated images.

## Description

The present invention relates to a technology in which images are displayed on a:plurality of display apparatus, and it particularly relates to a technology in which a wide viewing angle image is displayed in a manner such that the image is divided among a plurality of separate display apparatus arranged in the vicinity of a user.

In recent years technologies for generating or processing images, such as computer graphics and special image effects, have made marked advances. Along with it, ever-versatile infrastructures for distributing such images are being built and equipment and applications for reproducing a great variety of images are finding wider use. These factors are now combining to usher in a new age in the world of broadcasting and image distribution. Under these circumstances, what is today attracting our attention as image contents of the next generation includes super-panoramic images shot by a 360-degree camera or the like, and images of virtual reality space, which are three-dimensional virtual space created by computer graphics or other technologies. These images of wide viewing angles are already on the scenes of electronic commerce and so forth. For example, there are such contents as allow a virtual walk-through of an object of real property.

These images of wide viewing angles, by nature, contain image information not only for the front of a user but also for the areas surrounding the user. Accordingly, the display equipment to display such images may employ a large screen or a spherical screen that encloses a user, thereby giving him/her the sense of beihg on the spot. However, such equipment tend to be large and expensive, and their installation in homes and similar spaces present restricting conditions.

The present invention has been made in view of the foregoing circumstances and an object thereof is to provide a technology for displaying images of wide viewing angles effectively by employing a relatively simple system configuration. Another object thereof is to provide a technology that allows the popular viewing of images of wide viewing angles at home and other similar spaces with reduced trouble and cost of installing them.

According to the present invention, in order to solve these problems, where three-dimensional space images such as virtual reality images or image data such as panoramic images represented in such a form as to enclose a user are divided among a plurality of display apparatuses arranged around the user and displayed, information indicative of respective positions of the display apparatuses are acquired as appropriate and images that must be seen from the user in a direction of a display apparatus is generated and displayed on said display apparatus.

This display technology is realized by a display system which includes a plurality of display apparatuses and at least one display control apparatus. The display apparatus includes: a detector which detects a position of the display apparatus; and a notifying unit which notifies the display control apparatus of information indicative of the position of the display apparatus detected by the detector. The display control apparatus includes: a position information acquiring unit which acquires from the notifying unit the information indicative of the position of the display apparatus; and an image generator which generates images to be displayed on the display apparatus, based on the information, indicative of the position of the display apparatus, acquired by the position information acquiring unit, and which supplies the thus generated images to the display apparatus. The plurality of display apparatuses display images acquired from the image generator.

It is to be noted that any arbitrary combination of the above-described structural components and expressions changed between a method, an apparatus, a system, a computer program, a recording medium that stores the computer program, a data structure and so forth are all effective as and encompassed by the present embodiments.

Moreover, this summary of the invention does not necessarily describe all necessary features so that the invention may also be sub-combination of these described features.
Fig. 1 illustrates.,an overall structure of a display system according to a first embodiment of the present invention.
Fig. 2 shows an example of dividing a display screen to a plurality of areas and displaying each area in different display apparatus.
Fig. 3 shows an internal structure of the display apparatus according to the first embodiment.
Fig. 4 shows an internal structure of a display control apparatus according to the first embodiment.
Fig. 5 shows another exemplary overall structure of the display system.
Fig. 6 shows still another exemplary overall structure of the display system.
Fig. 7 illustrates an example of image data displayed by a display system.
Fig. 8 illustrates how the position of a viewpoint is shifted.
Fig. 9 illustrates how a viewpoint and display screens are simultaneously shifted.
Fig. 10 illustrates how a display apparatus shifts its position.
Fig. 11 shows an example where a panoramic image is simultaneously shot at a plurality of points.
Fig. 12 shows an example where a panoramic image is shot at a plurality of moving points.
Fig. 13 shows another example where a panoramic image is shot at a plurality of moving points.
Fig. 14 shows an example of a display system according to the first embodiment applied to a user interface between a plurality of apparatus.
Fig. 15 shows an overall structure of a display system according to a second embodiment of the present invention.
Fig. 16 shows an overall structure of a display system according to a third embodiment of the present invention.
Fig. 17 illustrates a cross-sectional view of a user interface device according to a fourth embodiment of the present invention.
Fig. 18 illustrates a method of fixing a concavo-convex layer.
Fig. 19 shows another example of the concavo-convex layer.
Fig. 20 illustrates a cross-sectional view of a user interface device according to a fifth embodiment.
Fig. 21 illustrates a method of fixing an optical fiber layer.
Fig. 22 is a perspective view of a display apparatus according to a sixth embodiment of the present invention.
Fig. 23 is a cross-sectional view of a display apparatus according to the sixth embodiment.
Fig. 24 shows an applied example of the display apparatus according to the sixth embodiment.
Fig. 25 shows another applied example of the display apparatus according to the sixth embodiment.

The invention will now be described based on embodiments which do not intend to limit the scope of the present invention but exemplify the invention. All of the features and the combinations thereof described in the embodiments are not necessarily essential to the invention.

### First embodiment

A display system according to a first embodiment of the present invention is constituted by a plurality of display apparatus disposed around a user and displays a super-panoramic space image or three-dimensional virtual reality space image with the plurality of display apparatus operating in an interlocked manner. The screen of each apparatus serves as a "window" through which a user sees a super-panoramic space or three-dimensional virtual reality space which unfolds around the user. The user, by receiving the images and sounds of a virtual space surrounding him/her through these "windows," can gain a vivid sense of being on the spot or being immersed in the scene of the super-panoramic space or three-dimensional virtual reality space.

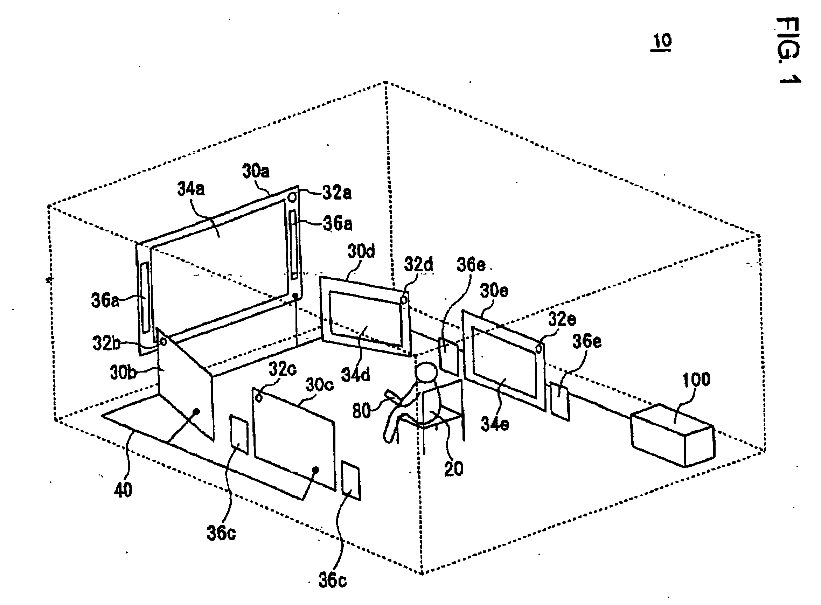

Fig. 1 illustrates a general structure of a display system 10 according to the first embodiment of the present invention. The display system 10 includes a plurality of display apparatus 30a, 30b, 30c, 30d and 30e, which are disposed around a user, and a display control apparatus 100. These apparatus are connected with one another via a network 40. The network 40 may be a cable connecting the respective apparatus or a home network utilizing LAN, WAN, the Internet, power-supply line or the like. Though Fig. 1 shows an example of a wired network 40, the network may, of course, be a wireless one. Hereinafter, the super-panoramic space images and three-dimensional virtual reality images to be displayed by the display system 10 are also referred to collectively as "wide viewing angle images." The display system 10 is controlled by a remote controller 80 owned by a user 20.

Each of the display apparatus 30 includes a position sensor 32, as an example of a detecting unit to detect the position of the display apparatus, a display screen 34, and a speaker 36. The position.information on the display apparatus 30 acquired by the position sensor 32 is sent to the display control apparatus 100 via the network 40. The display control apparatus 100 generates images, of a wide viewing angle image, that must be visible on the display screens 34 of the display apparatus 30 as seen from the user 20, based on such information as position, direction and screen size of each display apparatus 30 and sends them to their respective display apparatus 30. Likewise, the display control apparatus 100 generates sounds that must be audible in the directions of the display apparatus 30 and sends them to their respective display apparatus 30. Each of the display apparatus 30 outputs the image sent from the display control apparatus 100 to the display screen 34 thereof and the sounds to the speaker 36 thereof. In this manner, images and sounds that: appear to envelop a user are presented by a plurality of display apparatus 30 which are actually disposed in such a manner as to surround the user.

In the conventional mode of displaying images on display apparatus 30, the same images are normally displayed thereon, regardless of the size of the screens thereof. According to the display system 10 of the present embodiment, however, parts of a wide viewing angle image are cut out and displayed on their respective display apparatus 30 in correspondence with the position, direction and screen size of each display apparatus 30 as well as with the position and the line of sight of a user 20. As an example of a wide viewing angle image, a three-dimensional CG (computer graphics) is displayed by the display system 10 of the present embodiment. In this case, the world coordinates of the three-dimensional CG may be so arranged as to correspond to the coordinates of the real world in which the images are viewed. In such a case, each of the plurality of display apparatus 30 is equivalent to a view frustum used in the coordinate transformation of CG.

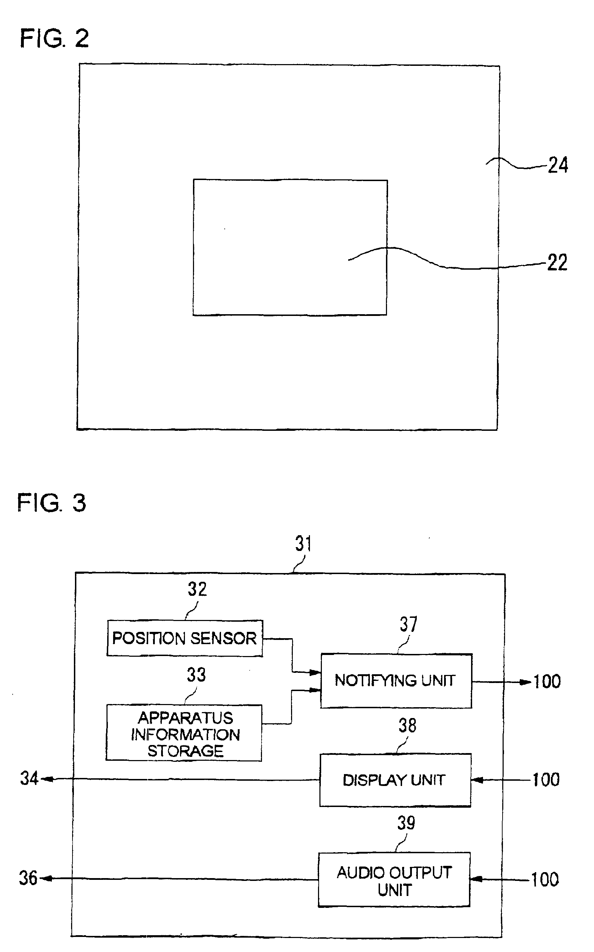

As the display apparatus 30, television display apparatus or any other arbitrary display apparatus, including display devices of personal computers, display devices of notebook-type, tablet-type, portable-type or table-type information terminals, display screens of portable phones, projectors and HMD (Head Mounted Display), may be used. Since a wide viewing angle image is divided for a plurality of display apparatus and displayed thereby, it is not necessary to prepare for this system a display apparatus that has a gigantic screen. Accordingly, a display system according to the present embodiment can be structured at a relatively low cost. Moreover, as shown in Fig. 2, an area 22 near the center of a screen may be used for higher definition display by a liquid crystal display apparatus or the like and an area 24 surrounding the area 22 may be used for display by a display apparatus, such as a projector, which is suited for large-screen display. In such a case, the area near the center of projection may be shielded so as to prevent an image projected by the projector from interfering with an image of the liquid crystal display apparatus, or otherwise the images may intentionally be displayed overlapping each other. Here, the area 22 should not necessarily be positioned in around the center of the area 24. Display control apparatus 100 can acquire the display screen position of the area 22 and that of the area 24. Therefore, in accordance with those positions, an image to be displayed in the area 22 can be embedded onto an image to be displayed in the area 24 or those image can be displayed overlapping each other as described above.

The display apparatus may normally be used for their respective uses and may be connected to this system only when wide viewing angle images are to be displayed. As display apparatus 30, dedicated display apparatus equipped with communication control functions appropriate for the communication via the network system 40 according to the present embodiment may be used, or existing display apparatus may be connected to this system to perform desired functions. In the latter case, a display system may be structured, for instance, by mounting position sensors 32 on the existing display apparatus, thereby sending position information to the display control apparatus 100 by radio or like means and having the display control apparatus 100 supply images to the image input terminals of the display apparatus and sounds to the sound input terminals thereof. Such a system structure does not require installation of special display apparatus and may therefore be introduced easily at a reduced cost. Moreover, instead of mounting the position sensors 32, an input concerning information on the position of the display apparatus 30 may be received from the user, and the position of the display apparatus 30 may be adjusted by the user him/herself .

Fig. 3 shows an internal structure of a control unit 31 provided in the display apparatus 30. The control unit 31 includes a position sensor 32, an apparatus information storage 33, a notifying unit 37, a display unit 38 and an audio output unit 39. In terms of hardware, the above-described structure can be realized by a CPU, memory or the like. In terms of software, it is realized by programs or the like, but drawn and described here are function blocks that are realized in cooperation with those. Thus, it is understood by those skilled in the art that these function blocks can be realized in a variety of forms by hardware only, software only or the combination thereof.

The position sensor 32 detects position information on the display apparatus 30. As the position sensor 32, any of various sensors operating on magnetic, infrared, ultrasonic or other principles may be utilized. For example, a magnetic, optical, acoustic or other signal transmitter may be installed on a display control apparatus 100, a remote controller 80 owned by a user, a display apparatus 30a, which serves as the main screen, or on the wall or ceiling of the room in which the present system is installed, and a receiver of such signals may be installed on each unit of the display apparatus 30. When a magnetic sensor to receive magnetic signals from a magnetic field generator is used as the position sensor 32, a communication path may be provided to achieve synchronization between the magnetic field generator and the magnetic sensor. In order to obtain highly accurate position information in a wide area, a plurality of magnetic field generators may be disposed in interspersed positions, and position information on each display apparatus 30 may be calculated by integrally analyzing the signals received by each position sensor 32 from those magnetic field generators. Moreover, each position sensor 32 may be equipped with transmitter and receiver functions, so that their relative positions may be detected through communication between the position sensors. For instance, the distance between the apparatus themselves may be estimated from the wave strengths as an application of a short-range radio communication system using weak radio waves, or Bluetooth or similar wireless technologies may be employed for the same purpose. In such a case, the display control apparatus 100 may, for instance, gather information on distances between the apparatus from each display apparatus 30 and calculate the respective positions of the display apparatus 30, using triangulation or similar technique.

Otherwise the position sensors 32 may be sensors that receive signals from GPS satellites or may be image pickup devices equipped with distance-measuring function. When a GPS receiver is used as a position sensor 32, each display apparatus 30 can obtain position information on itself. Moreover, when an image pickup device equipped with distance-measuring function is used as the position sensor 32, each display apparatus 30 can obtain its own position relative to the user 20 or to the other display apparatus 30. As will be described below, when not the display control apparatus 100 but each display apparatus 30 generates images to be displayed on its own display screen, a technology may be utilized in which the display apparatus 30 can obtain position information on its own as described above.

The three-dimensional position of a display apparatus 30 may be detected by using parallax which results from a shot of the display apparatus 30 by a plurality of cameras or by shooting an image of the display apparatus 30 by an image pickup device having a distance measuring function. In these cases, it is not necessary that a position sensor 32 be installed on each display apparatus 30. The position of each display apparatus 30 may be detected by providing each display apparatus 30 with an infrared LED and capturing the infrared LED with a single or plurality of infrared cameras installed in predetermined positions, such as on the display control apparatus 100 or on the ceiling of the room. In this case, the individual apparatus may be identified by a blinking pattern of the infrared LED of each display apparatus 30. Where the image-pickup speed of the infrared LED camera is relatively slow, synchronization may be set between the infrared LED and the infrared camera so as to accurately identify the blinking pattern of the infrared LED.

Where an image is to be projected on a screen or a wall by a projector, the position information on a projection screen may be acquired by an image recognition scheme in which invisible light, such as infrared light, is cast thereto and picked up by a camera. If the form of a projection surface is also to be taken into consideration, a calibration pattern of visible light or invisible light may be projected from a projector, and then the position, direction and form of the projection surface may be recognized by a stereo video camera or the like, and based on the thus recognized position, direction and form thereof, a processing such as distorting the projection image may be carried out.

In order to generate images on respective display apparatus 30, it is necessary to obtain information not only on the three-dimensional positions of the display apparatus 30 but also on the orientations of the display screens thereof. If the position sensor 32 is equipped with a gyroscope, tilt angles of the three axes may be detected from a reference position of the gyroscope, so that the orientation of the display screen 34 in a three-dimensional space may be calculated. Moreover, a sensor capable of detecting 6 degrees of freedom in the position and article may be utilized. In these cases, each display apparatus 30 may be provided with a single position sensor 32. In an alternative method for detecting the orientation of the display screen 34, the display apparatus 30 may be provided with a plurality of position sensors 32, or a sensor, such as an acceleration sensor that can detect the gravity and a geomagnetism sensor, which can detect the tilt angle may be installed separately. Moreover, where the position of each display apparatus 30 is detected through a shot of the display apparatus 30 by a plurality of image pickup devices installed externally, the direction of the display screen 34 of the display apparatus 30 may be determined from the images shot thereby.

The apparatus information storage 33 stores characteristics information peculiar to the display apparatus 30, such as the size, aspect ratio, number of pixels and color characteristic (e.g. gamma value) of the display screen of the display apparatus 30, the processing capacity of the display unit 38, the ID, maker name, model and other identification information on the apparatus. These pieces of information are conveyed to the display control apparatus 100, where they are utilized to generate images to be displayed on the display apparatus 30. In another example, the apparatus information may be stored in an arbitrary device which is connected to the display control apparatus 100 through a network. In other words, the apparatus information storage 33 may be any device structured such that the display control apparatus 100 can acquire characteristics information on the display apparatus 30 which is part of the present display system 10. For example, characteristics information on the display apparatus 30 may be listed on a Website managed by a manufacturer of the display apparatus 30, and the characteristics information on the display apparatus 30 may be acquired from the Website. A structure realized thereby makes maintenance of information, such as addition, alteration and correction thereof, easier and presents superior system extendability because the structure allows even a display apparatus 30 without an apparatus information storage 33 to take part in this display system 10.

The notifying unit 37 notifies the display control apparatus 100 of position information on the display apparatus 30 detected by the position sensor 32 and characteristics information on the display apparatus 30 stored in the apparatus information storage 33. The characteristics information on the display apparatus 30 may be conveyed to the display control apparatus 100, for instance, when the display apparatus 30 is connected to a network or when the display system 10 is started or initialized. Information that is not altered, such as the size and the number of pixels of the display screen, remains valid once conveyed to the display control apparatus 100. Where the characteristic information regarding display, such as the color characteristic such as luminance and saturation, and aspect ratio of a display screen or so forth, and the characteristic information regarding audio output such as sound volume of a speaker or so forth, are so structured as to be alterable, altered information may be conveyed to the display control apparatus 100 when the alteration is detected. Position information on the display apparatus 30 may be notified at predetermined time intervals or whenever an alteration of the position or direction of the display apparatus 30 is detected.

The display unit 38 performs a processing for acquiring images generated by the display control apparatus 100 according to the position of the display apparatus 30 and displaying the acquired images on the display screen 34. The audio output unit 39 performs a processing for acquiring sounds generated by the display control apparatus 100 and outputting the acquired sounds to a speaker 36.

The notifying unit 37 may process signals received by the position sensor 32 within the display apparatus 30, calculate the three-dimensional position information and send it to the display control apparatus 100, or may send the signal information only to the display control apparatus 100, where the three-dimensional position information on each display apparatus 30 is calculated. In the former case, the display apparatus 30 includes a sensor position information calculating unit (not shown). According to the present embodiment, the position information is calculated by the display control apparatus 100.

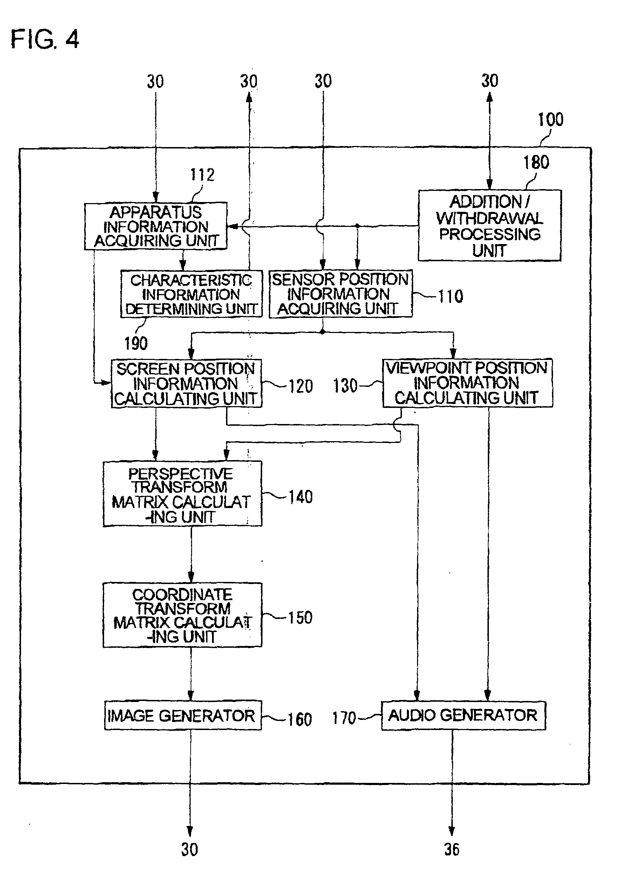

Fig. 4 shows an internal structure of a display control apparatus 100. These function blocks may be realized in various forms combining hardware and software.

A sensor position information acquiring unit 110 acquires signal information, which is received by the position sensor 32, from the notifying unit 37 of each display apparatus 30. An apparatus information acquiring unit 112 acquires characteristics information on each display apparatus 30, which is stored in each apparatus information storage 33, from the notifying unit 37 of each display apparatus 30. In another example, characteristics information on each display apparatus 30 may be saved beforehand in the display control apparatus 100. Moreover, the characteristics information may be obtained by acquiring identification information on each display apparatus 30 via a network 40 and accessing a Webpage or the like listing characteristics information on each display apparatus 30. The apparatus information acquiring unit 112 may serve as a characteristic information acquiring unit. In this case, the characteristics regarding the display or audio output of the display apparatus 30 are acquired from the notifying unit 37 thereof. A screen position information calculating unit 120 calculates the position and direction of the display screen 34 of each display apparatus 30, based on information acquired by the sensor position information acquiring unit 110, information acquired by the apparatus information acquiring unit 112 on the position of the position sensor 32 mounted on each display apparatus 30, the width and height of the display screen 34, and so forth.

A viewpoint position information calculating unit 130 calculates a viewpoint position of the user 20 based on the information acquired by the sensor position information acquiring unit 110. If the user 20 has a portable display device, HMD or remote controller, the position thereof may be calculated as a viewpoint. Or, a center or center of gravity of a plurality of display apparatus 30 may be used as the viewpoint. Or a fixed viewpoint position may be registered in advance. In other words, it is not necessary that the viewpoint position to be calculated here is in agreement with the actual viewpoint position of the user 20, but it is preferably as close to the actual viewpoint position as possible. The direction of a sight line may be determined by capturing the image of a user with a camera or the like and detecting the direction the user faces by image processing, or it may be the direction of the main screen, which may be selected beforehand, from the viewpoint position, or it may be determined beforehand fixedly. Where a plurality of users use this system, a user, who serves as reference, may be selected, and the position or direction of the user's face or eyes may be detected. Display apparatus having a function of displaying multi-viewpoint parallax images and capable of realizing naked-eye stereoscopic vision is suited for the use of this system by a plurality of users because it can produce different images according to the position of the users.

In consideration of cases where a display apparatus 30 or a user moves during the use of the system, it is preferable that the sensor position information acquiring unit 110 and the viewpoint position information calculating unit 130 grasp the present positions of the display apparatus 30 and the user 20 by detecting them not only at the start or initialization of the display system 10 but also at predetermined time intervals, for instance.

A perspective transform matrix calculating unit 140 calculates, based on the position information on each display screen 34, a perspective transform matrix to obtain images which will result when a wide viewing angle image is seen through the display screens 34 from the viewpoint position. A coordinate transform matrix calculating unit 150 calculates a coordinate transform matrix by which three-dimensional space data are transformed into screen coordinate data by having necessary information, such as the movement information on the viewpoint position and the scaling information for enlargement or reduction of the wide viewing angle image, act on the perspective transform matrix. Moreover, a structure may be such that the user 20 can move the viewpoint position or can enlarge or reduce the size of an image through a user interface such as a remote controller. In such a case, as instructions are inputted by the user 20, the coordinate transform matrix calculating unit 150 updates the coordinate transform matrix according to the instructions. An image generator 160 generates images to be displayed on respective display apparatus 30 by applying a coordinate transform matrix to three-dimensional space image data which represent a wide viewing angle image. The images generated are supplied to the respective display apparatus 30 and displayed on the display screens 34 thereof. It is to be noted that an image processing technology deploying a known computation principle can be utilized as a method for calculating a perspective transform matrix and a coordinate transform matrix and thus obtaining images by having the matrices act on the image data.

Based on the position of each display apparatus 30 and the viewpoint position, an audio generator 170 generates sounds to be supplied to a speaker 36 built inside the display apparatus by applying a sound processing to generate a three-dimensional sound field to audio data prepared. It is to be noted also that a known technology can be utilized for the sound processing. Where the speakers 36 are provided separately from the display apparatus 30, the position information on the speakers 36 may be obtained separately by position sensors 32 provided thereon. A plurality of speakers 36 with position sensors may be arranged around a user so that the optimum audio signals in light of the positions of the respective speakers 36 can be distributed. In this case, the sense of being on the spot can be further intensified and significantly improved. Compared to the normal setting where the stereo speaker having two separate speakers is used and thus the optimum user audio-visual position is restricted, the use of a plurality (more than three) of speakers can broaden the range of the optimum user audio-visual positions. Moreover, the optimum audio signals can be constantly generated by acquiring the position of the user and reflecting the thus acquired position upon the audio signals.

The image data and the audio data, which serve as basic material for processing and operation at the image generator 160 and the audio generator 170, may be acquired through a network distribution, broadcast waves or the like or may be read out from a recording medium, such as CD, DVD or video tape. Images generated by the image generator 160 and sounds generated by the audio generator 170 may be conveyed to the respective display apparatus 30 through the network 40 or conveyed to the image input terminals and audio input terminals thereof via dedicated cables.

A characteristic information determining unit 190 determines the characteristic regarding the display or audio output of the plurality of display apparatus 30 based on the characteristic information of each display apparatus 30 acquired by the apparatus information acquiring unit 112, which is an example of the characteristic information acquiring unit, and notifies the determined characteristic to each display apparatus 30, so that the characteristic regarding the display or audio output of the plurality of display apparatus 30 added in the display system 10 might be unified. Each display apparatus 30 changes its own characteristic setting to the characteristic notified by the characteristic information determining unit 190. For example, where a user individually adjusted the characteristic of a display apparatus, which affects the image quality thereof, such as luminance, contrast, color balance or so forth, the image quality of the plurality of display apparatus 30 added in the display system 10 may be unified by reflecting the adjusted value to other display apparatuses 30. In this manner, uniform audiovisual environment can be provided to users.

An apparatus addition/withdrawal processing unit 180 performs a processing for the addition or withdrawal of a display apparatus 30 to or from the display system 10. The apparatus addition/withdrawal processing unit 180 detects display apparatus 30 connected to the network 40 at the initialization or start of the display system 10, and then instructs the sensor position information acquiring unit 110 to acquire the position information on these display apparatus 30 and instructs the apparatus information acquiring unit 112 to acquire the characteristics information on those display apparatus 30. Upon acquiring the position information and characteristics information on the display apparatus 30, the apparatus addition/withdrawal processing unit 180 judges whether to add each of the display apparatus 30 to the display system 10 or not. For example, where a display apparatus 30 is not provided with a position sensor 32, a decision may be made not to add it to the display system 10. However, if the position of a display apparatus 30 is detected by photographing or recording an image of the display apparatus 30 by an image pickup device, then a decision may be made to add the display apparatus 30 not provided with a position sensor 32 to the display system 10. The position of the display screen of the display apparatus 30 may be detected by employing a method similar to the above-described method ot detecting the projection surface of a projector.

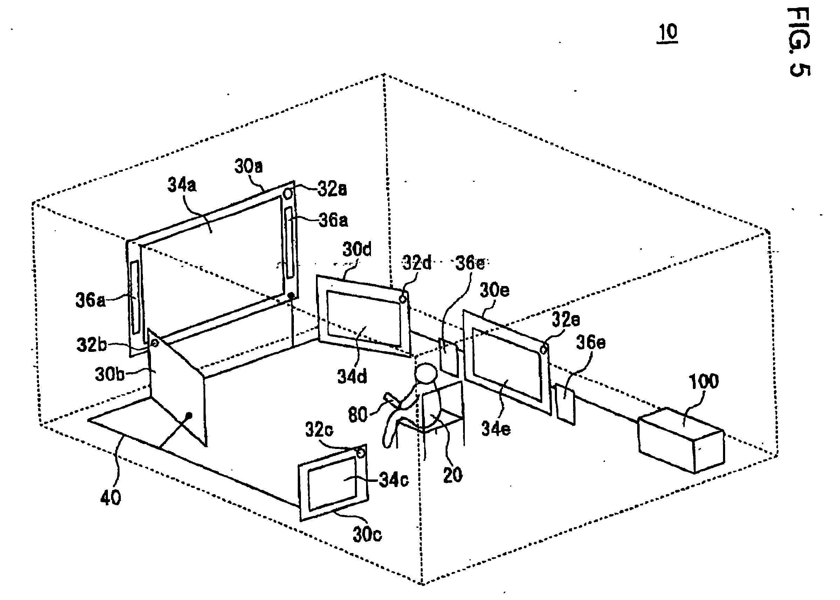

The apparatus addition/withdrawal processing unit 180 may acquire the orientation of the display screen of a display apparatus 30 and decide not to add the display apparatus 30 to the display system 10 if the orientation thereof is found deviating significantly from the user's direction of sight line. In an example illustrated in Fig. 5, for instance, the display apparatus 30c, of ail the display apparatus 30 connected to a network 40, has the orientation of its screen 34c deviating widely from the direction of sight line of a user 20, and therefore the user 20 can scarcely see the screen 34c of the display apparatus 30c even if part of a wide viewing angle image is displayed on the display apparatus 30c. In this case, the apparatus addition/withdrawal processing unit 180 may decide not to add the display apparatus 30c to the display system 10.

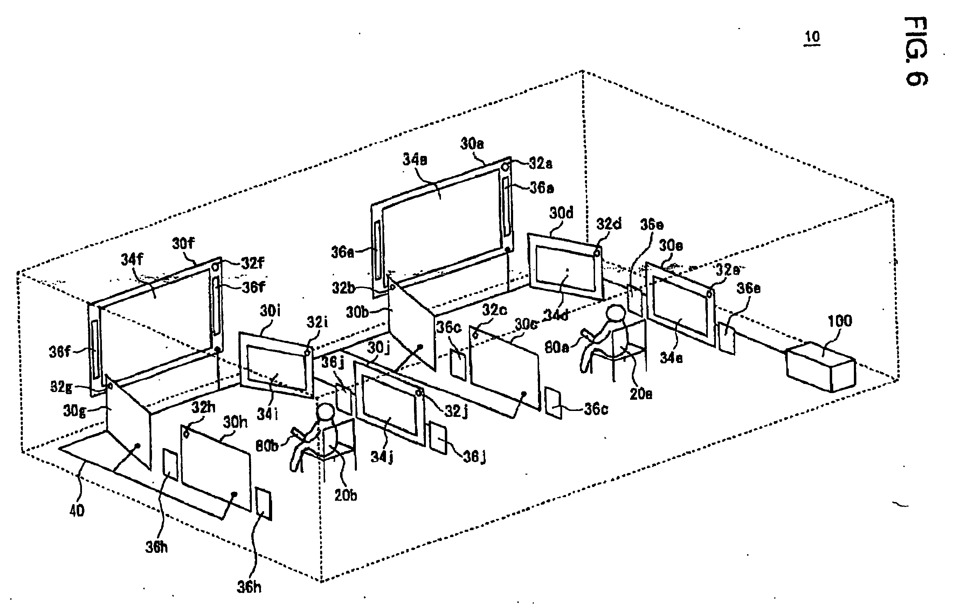

Furthermore, the apparatus addition/withdrawal processing unit 180 may treat display apparatus 30 as a group by grasping the positions and the screen orientations of all the display apparatus 30 connected to the network 40. In an example illustrated in Fig. 6, for instance, display apparatus 30a, 30b, 30c, 30d and 30e are disposed around a user 20a, and display apparatus 30f, 30g, 30h, 30i and 30j are disposed around a user 20b. In this case, the apparatus addition/withdrawal processing unit 180 treats the display apparatus 30a, 30b, 30c, 30d and 30e as a group and the display apparatus 30f, 30g, 30h, 30i and 30j as another group and supplies a wide viewing angle image to each group. At this time, the viewpoint position information calculating unit 130 sets a viewpoint position for the group of display apparatus 30a, 30b, 30c, 30d and 30e in reference to the user 20a and a viewpoint position for the group of display apparatus 30f, 30g, 30h, 30i and 30j in reference to the user 20b. This example is suitable for a case when the user 20a and the user 20b play a game or a match against each other through the network 40.

The apparatus addition/withdrawal processing unit 180 may detect display apparatus 30 currently connected to the network 40 by sending connection check signals through the network 40 at predetermined time intervals during the operation of the display system 10 and then by receiving response signals from the display apparatus 30. When a display apparatus 30 is newly connected to the network 40, the apparatus addition/withdrawal processing unit 180 judges whether to add the display apparatus 30 to the display system 10 or not by a processing similar to that at the start of the display system 10, and upon a decision to add, has the image generator 160 and the audio generator 170 generate image information and audio information, respectively, to be sent to the display apparatus 30. Also, when a display apparatus 30 having been part of the display system 10 is cut off from the network 40, the apparatus addition/withdrawal processing unit 180 causes the display apparatus 30 to withdraw from the display system 10 and thereafter does not allow image information and audio information to be generated for said display apparatus 30. In the above example, the apparatus addition/withdrawal processing unit 180 checked the presence of display apparatus 30 through the network 40, but, in another example, the addition, removal, movement or the like of display apparatus 30 may be detected by capturing images of the user's surroundings with an image pickup device. Moreover, a short-range radio communication system using weak radio waves, or Bluetooth or similar wireless technologies may be employed.

As described above, in the display system 10 according to the present embodiment, display apparatus 30 connected to the network 40 are automatically detected by the apparatus addition/withdrawal processing unit 180 and at the same time the respective positions of the display apparatus 30 are detected by the sensors thereof, so that images of a wide viewing angle image to be displayed in the respective positions of the display apparatus 30 may be generated. Accordingly, when a display apparatus 30 is newly installed or the position thereof is changed, a user is not required to carry out such troublesome work as position adjustment of the screen and hence a display system according to the present embodiment can be structured and constructed easily. In fact, a user may exercise a great freedom in disposing in his/her own living environment a plurality of display apparatus, which have each an independent display screen. Moreover, since display apparatus may be added to the system easily, it is also possible to add them one by one as the user's budget allows. Thus, the display system according to the present embodiment features markedly reduced cost and trouble at the time of introduction as compared with conventional display systems employing large screen displays, so that popular use thereof in private homes as well as in restaurants and other small-scale stores may be expected.

Where movable display apparatus, such as an HMD and small-size displays, are used, the positions thereof may be detected in real time and images to be displayed may be moved according to the movement of the display apparatus. Especially when an HMD is used, a user may enjoy an environment where he/she has a more vivid sense of being on the spot because images, which are supposed to be visible in their respective directions, can be displayed according to the position of the user or the direction his/her head is facing.

Next, a structure wherein a user inputs instructions to the display system 10 is described. In the present embodiment, instructions from the user 20 are communicated to a plurality of display apparatus 30 and a display control apparatus 100 belonging to a display system 10 by a remote controller 80 which is comprised of buttons, direction keys and the like for inputting the instructions from the user. The remote controller 80 may transmit signals via radio transmission or cable network. One of the display apparatus 30 may be assigned to function as the remote controller 80. For example, a portable game machine, PDA, portable phone or the like, which is owned and can be operated by the user, may function as the remote controller 80. Signals transmitted from the remote controller 80 may be received collectively by the display control apparatus 100, a main display apparatus 30 positioned in front of the user 20 (e.g., the display apparatus 30a in Fig. 1) or a home server (not shown), and necessary instructions may be conveyed to each display apparatus 30 from the apparatus which has received the signals collectively (hereinafter referred to also as "receiving apparatus"). Alternatively, each display apparatus 30 and a display control apparatus 100 may receive signals transmitted to themselves. In the former case, the receiving apparatus that has received signals from the remote controller 80 may convey the instructions to each display apparatus 30 and the display control apparatus 100 via a network 40 or via an infrared generator or the like installed on the ceiling or the like. It should be pointed out here that the remote controller 80 may be so structured as to be able to input user instructions not only to display apparatus 30 and the display control apparatus 100 but also to any other household electric appliance, such as audio equipment, air-conditioning equipment, lighting fixture, motor-driven blind, door phone and the like.

In order to realize operation relative to a variety of functions of a plurality of equipment to be operated, the remote controller 80 may be provided with a CPU or similar structure for executing programs for such operation. A program for use with operation may be recorded beforehand in memory, such as ROM, or may be downloaded from an equipment to be operated prior to the operation by a user. In the latter case, since it is possible to avoid the retention of programs which are not actually used, a saving on the structure of memory or the like may be achieved. At the same time, where multiple units of equipment are to be operated or where a program of a large capacity is to be run to operate multiple functions, such operation may be accomplished by efficiently using a limited memory mounted on the remote controller 80. Moreover, this makes it easier to cope with addition, change or modification of such program. Programs to be used with great frequency may be stored in memory on the apparatus or the remote controller 80 side and a Website of the equipment maker may be looked up at the start of operation or at predetermined time intervals, utilizing the version No. of a program or the like, to see if there is any recently updated version of the program, so that if there is any, the latest program may be downloaded from the maker's Website, Since by the addition/withdrawal processing unit 180 the receiving apparatus can grasp apparatus which is to be operated and can be added to the present apparatus system, the operation programs for such apparatus may be transferred to the remote controller 80 beforehand.

The remote controller 80 may be provided with a display device capable of offering the user a graphical user interface (GUI). This display device may be further provided with an input device, such as a touch panel. Or, where a display system 10 is equipped with an image pickup device for capturing the image of a user to detect his/her position, a gestural interface may be employed that can determine the instructions from the user by detecting the action of the user by the image pickup device.

In another example, not a structure, such as CPU or memory, but a structure for inputting user instructions, such as cross key, select button, cancel button, define button and the like, may be provided on the remote controller 80 side, and thus operation programs may be run on the apparatus side or the receiving apparatus side, such as a display control apparatus 100 or a home server. This can make the remote controller 80 smaller and simpler in structure. In this case, it may be so structured that a GUI for operation is displayed on a display apparatus 30 or the like and the user operates the GUI by operating buttons or the like on the remote controller 80. The GUI may be such that usable functions can be changed according to the skill of the user or that the screen can be customized according to the language, age, gender, taste and the like of the user.

An apparatus to display the GUI may be an apparatus to be operated or any of the display apparatus 30 of the display system 10 if the apparatus to be operated does not have a display device. In the latter case, the operation program may be run by the apparatus to be operated and the display data only may be sent to the display apparatus 30 to display the GUI, or the program tor display may be run on the side of the display apparatus 30. Where the GUI is to be displayed on a display apparatus 30 of the display system 10, the GUI may be displayed on a display apparatus 30 located in front of the user, on a display apparatus 30 located in the direction the user is facing, or on a display apparatus 30 located in the direction the remote controller 80 is facing. Furthermore, the GUI may be displayed by preferentially selecting a display apparatus 30 whose power is on. Conversely, in order not to interfere with the viewing of the contents, the GUI may be displayed by selecting a display apparatus 30 whose power is off and then turning on the power to the thus selected display apparatus 30. In this case, the power to the display apparatus 30 which has displayed the GUI may be turned off at the end of the operation or when the operation has not been done for a predetermined length of time or longer. However, where a display apparatus 30 whose power is on is displaying a background image or the like to which the user is not required to pay any attention, the GUI may be displayed on such a display apparatus 30. Moreover, where the GUI is to be displayed on a display apparatus 30 currently displaying an image, the GUI may be displayed semi-transparently by alpha blending or similar technology in order to minimize the interference with the viewing. Moreover, the GUI may be projected on an area close to the user by an intelligent projector equipped with a swing or swivel mechanism, which has been installed on the ceiling or similar part of the room. It should be noted here that the above-described technology is applicable not only to the GUI but also in the display of subtitles and telops.

In changing the apparatus to be operated, an apparatus located in the direction the remote controller 80 is facing may be identified as the apparatus to be operated, or an apparatus to be operated may be specified by the user. Where the display system 10 is equipped with an image pickup device for acquiring the position or the screen orientation of the display apparatus 30, an apparatus to be operated may be specified by capturing the image of the remote controller 80 by the image pickup device and thus detecting the orientation of the remote controller 80. Alternatively, an apparatus to be operated may be specified by detecting the direction the remote controller 80 faces by an azimuth sensor or the like installed on the remote controller 80. In these cases, an apparatus to be operated may also be specified by a receiving apparatus, such as a display control apparatus 100. Moreover, by providing an image pickup device to the remote controller 80, the apparatus located in the direction the remote controller 80 is facing may be identified by ID based on the blinking of an LED provided to the apparatus or by another method. Upon receipt of signals from the remote controller 80, the receiving apparatus detects the orientation of the remote controller 80 using an image from an image pickup device or the like and specifies an apparatus which is in the intersecting position with the half-line indicated by the remote controller 80, based on the position information from the position sensors installed on the apparatus and the size, form and other information on each of the apparatus. In order that calculations in this process be made easier, the form or shape of the apparatus may be classified, in advance, into some categories. For example, the apparatus may be classified into the panel type, the box type and the pointer type and apparatus type IDs may be assigned to the respective types, so that a decision on selection may be made according to the apparatus type ID.

Once an apparatus to be operated is specified by a method as described above, the apparatus which is now the apparatus to be operated may be made known to the user by the blinking or lighting of an LED, an audio indication or a certain image display. For example, an icon or illustration indicating the current selection may be displayed on a display apparatus 30 having been selected to be operated, or an image indicating an apparatus to be operated may be displayed on a GUI. The user may be alerted accordingly by a display of moving pictures such as an animated figure or the like. Moreover, when there has been a change in the operating status of an apparatus as a result of some operation, the image being displayed may be changed so as to prevent any operational error by the user.

An operation in the operational system of the display system 10 structured as above will be described here. First, with the start of the display system 10, a maker's website or the like is accessed and the version of an operation program is checked, and if necessary, the latest version of the operation program is downloaded. Where the network connecting to the maker site works at sufficiently high speed, the operation program may be downloaded when the apparatus selected is now one to be operated by the remote controller 80. In this manner, resources such as memory can be saved.

Next, the receiving apparatus that receives instructions from the remote controller 80 grasps the positions of apparatus that exist on the same network 40. Since all of the apparatus connected to the network 40 are not necessarily located within the room where the user is, the positions of the apparatus located within the room must be grasped beforehand. This makes calculations at specifying the apparatus to be operated easier. The apparatus that exist in the neighborhood may also be grasped by the use of the blinking of an infrared LED or communications at proper electric field strength.

When the user aims the remote controller 80 at in the direction of an apparatus to be operated and presses down an apparatus select button to select the apparatus to be operated, the receiving apparatus specifies the apparatus to be operated by detecting the orientation of the remote controller 80. Once the apparatus to be operated is specified, it is indicated to the user by the blinking or lighting of an LED, the output of a confirmation tone or message, an image display or the like. Moreover, an image indicating the apparatus to be operated is displayed on the GUI. This image may be represented by an arbitrary format of image data, such as JPEG, Motion JPEG, three-dimensional polygon data or MIMe (Multiple Inbetweening Method) data for use with three-dimensional polygon data. When the user changes the orientation of the remote controller 80, the apparatus located in the general direction thereof may be chosen as candidates for selection and an apparatus to be operated may be finally selected or determined when the user presses down a select button or the like. In such a case, two kinds of tones and images for indicating the apparatus to be operated may be prepared, one for the stage of candidate selection and the other for the stage of final selection. Moreover, since similar indications made by a plurality of apparatus may confuse the user, several types of indication may be prepared for the user to select from, or each apparatus may be given the capability to change the color or the like on its own. Moreover, a cancel button or the like may also be prepared that can cancel an apparatus selection to the previous one when the user has selected a wrong apparatus to be operated.

Where an operation program is run on the remote controller 80 side, the operation program is downloaded from the apparatus to be operated to the remote controller 80 when the apparatus to be operation is specified. The API may be standardized for this purpose. Where the remote controller 80 is equipped with a display device for displaying a GUI, a processing for operation may be carried out on the GUI of the remote controller 80 and final instructions only may be transmitted to the apparatus side. Moreover, the operation program may be run on the apparatus side, and display data and display program may be sent to the remote controller 80, where they are displayed. According to the structure of apparatus and remote controller 80, a selection may be made of where to carry out the processing, thus distributing the load properly. Where the remote controller 80 is not equipped with a display device, a GUI may be displayed on a display apparatus 30 as has been described above. In this case, too, the remote controller 80 may, for instance, be provided with a simple display device which can supply such information as which apparatus has been selected for operation.

An ending processing, as described hereinbelow, is carried out when the user has pressed down an end button to end an operation, when no operation has been made by a user during prescribed period of time, or when it is judged, by a sensor which can detect that the user no longer holds the remote controller 80, that operation by the user is terminated. With the remote controller 80 having a display device, a switch is made to a power saving mode, such as turning off the backlight for display. Where a GUI has been displayed on a display apparatus 30, the previous image display is restored by erasing the GUI. In this case, it is preferable that the remote controller 80 is provided with the end button so as to enable a quick return to the original image display state at the end of the operation. Now, where the GUI has been displayed on a display apparatus 30 whose power is off, the power to the display apparatus 30 is set to off. Moreover, when an operation is to be carried out again by the remote controller 80 following an ending processing, the user may choose the same apparatus as an apparatus to be operated without switching to another. Furthermore, a timer function or similar means may be utilized to set a predetermined time at which an apparatus is selected automatically as an apparatus to be operated. Where a timer is set to automatically start an apparatus at a predetermined time, the apparatus to be operated by the remote controller 80 may be also switched to the selected apparatus automatically.

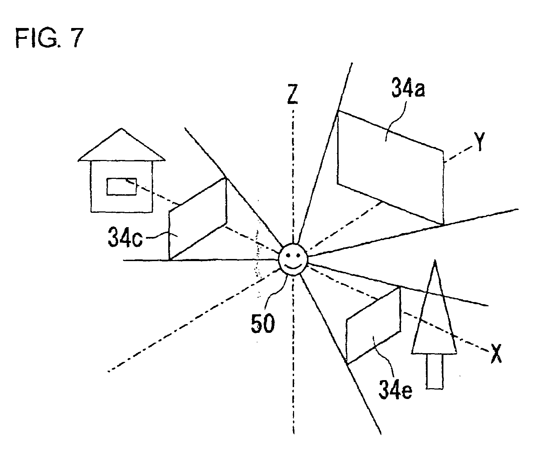

Fig. 7 illustrates an example of image data to be displayed by a display system 10 according to the present embodiment. In Fig. 7, an example of three-dimensional CG image is shown as an example of the wide viewing angle image data. A viewpoint 50 is set within a three-dimensional space, and virtual display screens 34a, 34c and 34e are disposed around the viewpoint 50. Here, the virtual display screens 34a, 34c and 34e are each disposed around the viewpoint 50 in such a manner as to reflect the positional relationship between the actual viewpoint position of the user and the display screen. On the display screen 34c, a "house" is displayed which exists in the direction of the display screen 34c as seen from the viewpoint 50. On the display screen 34e, a "tree" is displayed which exists in the direction of the display screen 34e as seen from the viewpoint 50.

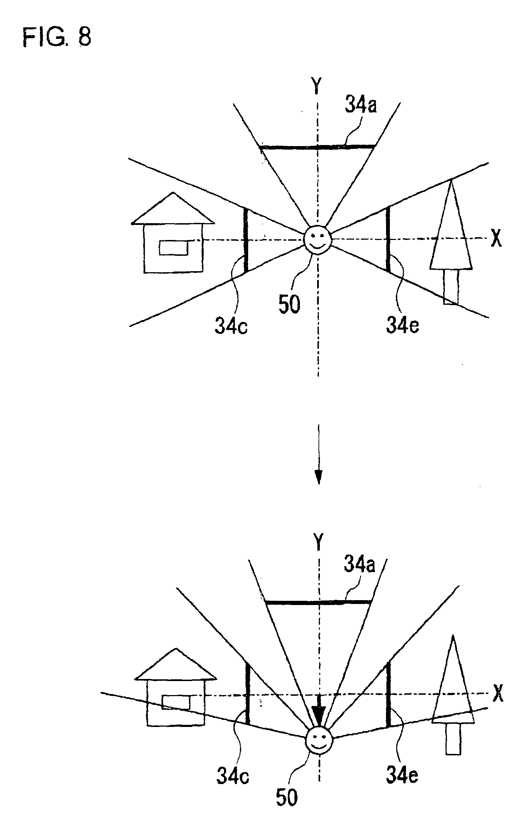

Fig. 8 illustrates a shifting of the position of a viewpoint 50. When a user has moved or when instructions to shift the viewpoint have been inputted at the remote controller 80 or the like, the viewpoint position information calculating unit 130 sets a new viewpoint position, and the perspective transform matrix calculating unit 140 and the coordinate transform matrix calculating unit 150 update their matrices, respectively. Then, based on the updated matrices, the image generator 160 generates images to be displayed on their respective display screens. Namely, images are not changed individually for the display apparatus 30, but they are changed in interlock with each other for all the display apparatus 30 at the instructions for the shifting of the viewpoint from the user.

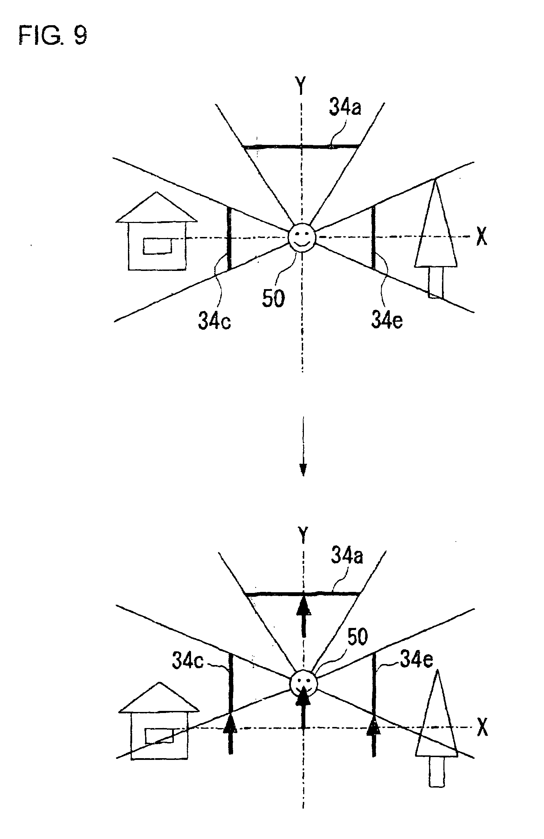

Fig. 9 illustrates a simultaneous shifting of a viewpoint 50 and display screens 34a, 34c and 34e. When the display screens are regarded as windows through which to see a three-dimensional space, unfolding outside the room, the example shown in Fig. 8 corresponds to a case where a user moves inside the room, and the example shown in Fig. 9 corresponds to a case where the whole room moves inside the three-dimensional space. There may be provided a structure for setting beforehand which of the above methods is to be used for the updating of:images when the user moves or when there is an input from the remote controller 80. Moreover, for example, shifting of the viewpoint and the display screen position shown in Fig. 9 may be performed by operating the controller 80, while the shifting of the viewpoint position shown in Fig. 8 is performed reflecting the shift of the user's viewpoint position detected by the sensor. Namely the former and the latter can be performed simultaneously. Naturally, the shifting described above may also be performed for the dramatic interpretation purpose in a manner predetermined by the creator of a game or image contents, not only performed based on a user's autonomous instruction.

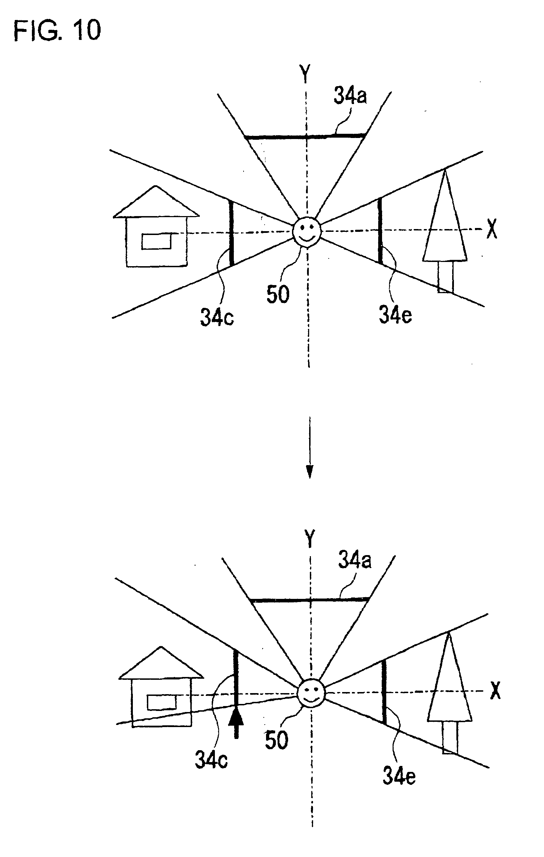

Fig. 10 illustrates a case where a display apparatus 30c shifts its position. When the display apparatus 30c has moved, the sensor position information acquiring unit 110 acquires new position information, and the screen position information calculating unit 120 calculates the position and orientation of the display apparatus 30c. Then, for the display apparatus 30c that has moved, the perspective transform matrix and the coordinate transform matrix are updated and an image generated.

As described above, where three-dimensional CG images are displayed as a wide viewing angle image, the images to be displayed on the respective display apparatus 30 may be generated by calculation when a change in the viewpoint or direction of sight line are instructed. However, it cannot be so easily accomplished when a panoramic image is to be displayed by this display system 10. If a panoramic image is captured by a camera system including a plurality of image pickup devices disposed in radial directions from a center point, a cylindrical or semi-spherical panoramic image can be obtained, and if a panoramic image is captured by a panorama camera capable of capturing all 360-degree directions simultaneously, a spherical panoramic image can be obtained. In these cases, if the image pickup devices do not have a function of acquiring depth-direction information, the panoramic image will be a two-dimensional image, and parts of the panoramic image will be cut off and displayed on the display apparatus 30 according to the positions of the user 20 and the display apparatus 30. Similarly, the sounds surrounding the image capturing position are processed in accordance with the positions of the speakers 36 and the user 20.

With a single panoramic image captured from a single position, a freedom permitted to the user is basically rotation only. The user can change the parts displayed on the display apparatus 30 by rotating the image but cannot move the viewpoint. However, when the user instructs a shift of the viewpoint in a certain direction, the user can accomplish a viewpoint shift in a simple and convenient manner, for instance, by causing an enlarged display of the image in said direction and a reduced display of the image in the opposite direction and shifting the image in the direction orthogonal to them sideways.

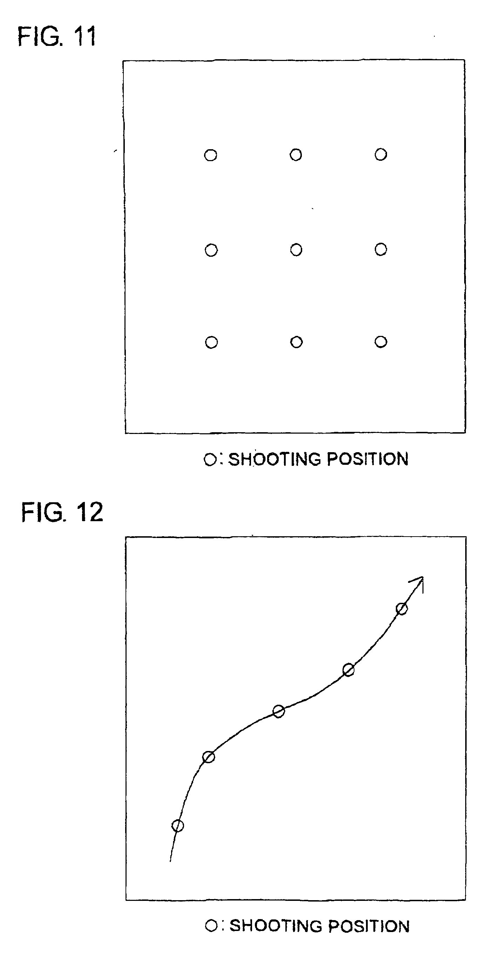

For the purpose of realizing a further accurate viewpoint shift, a panoramic image may be captured by a plurality of camera systems disposed at the plurality of points as shown in Fig. 11. In this case, when the viewpoint is shifted to a position different from the position of the camera system, an image may be generated by a synthesis processing or interpolation processing based on the panoramic images captured nearby, or such image processing techniques as alpha blending or gradation may be utilized. Moreover, the above-described processing of viewpoint shift for a single panoramic image may be used in combination.

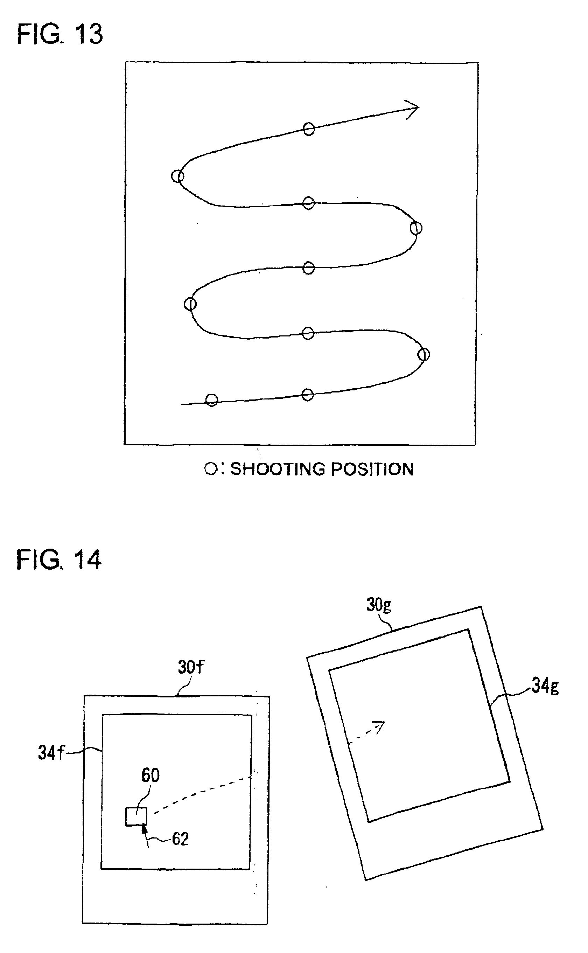

As another example for realizing viewpoint shift, a camera system may be mounted on a moving body and a panoramic image may be captured at a plurality of positions while moving, as shown in Fig. 12. In this case, the viewpoint may be shifted freely along the moving path. If it is desired that the viewpoint be shifted elsewhere than along the moving path, a panoramic image may be captured by moving the camera system zigzag to cover the whole movable area as shown in Fig. 13. In any of these cases, the image shooting time will change with the movement of the viewpoint, and therefore these methods are particularly suited for the capturing and display of objects that have no or little change with time.

When zooming-in or zooming-out is carried out during the display of a wide viewing angle image on a plurality of display apparatus 30, irregularities, such as overlapping of images between adjacent screens, may occur, for instance, when the image displays on the screens for all the display apparatus 30 are enlarged in the unison and interlocked manner. In such a case, a zooming-in in a certain direction may be realized as a viewpoint shift in said direction. Namely, to enlarge an image being displayed on a display apparatus 30, the image displayed in that direction is enlarged, while the image displayed in the opposite direction is reduced and the image displayed in the direction orthogonal to them is shifted sideways. Or the image on the display apparatus 30 specified by the user may only be locally enlarged or reduced. This corresponds to the viewing in that direction through a telescope or binoculars.

Examples of application of the display system 10 according to the present embodiment will be described hereinbelow. In the following example where the display system 10 is applied to games, a game program is executed by the display control apparatus 100, and the image and audio data generated by the display control apparatus 100 are sent to each of the display apparatus 30. The display control apparatus 100 acquires the position, motion, button operation and so forth of the remote controller 80, and executes an event according thereto so as to be reflected on the images and sounds. Moreover, as will be described in detail later, if the display apparatus 30 has a function of the display control apparatus 100, each display apparatus 30 may execute the game program and then generate the image data and the audio data. In this case, if the remote controller 80 has a display screen therein, the remote controller 80 itself may execute the game program and generate image data to be displayed on its own display screen. Thus, this remote controller 80 structured as above serves as a mode of the display apparatus 30.

### 1. Battle game

In this game, a virtual world is created by CG around a user and the user fights the enemies placed around him/her by using a remote controller 80 as a sword or gun. For example, when the user presses a button on the remote controller 80, an event of a character's firing a gun in a game may be executed. Moreover, when the user swings the remote controller 80 downward frpm an upper position, an event where a character in a game swings down the sword may be executed. The position and motion of the remote controller 80 may be detected by a position sensor or an image shot by an external image pickup device. The display of a virtual world built around the user by a plurality of display apparatus 30 can give the user a sense of being surrounded by enemies who are approaching him/her. Moreover, since a particular enemy displayed on a particular display apparatus 30 a user is now attacking can be detected by the orientation of the remote controller 80, the user can attack the surrounding enemies without any special operation on his/her part. Moreover, by detecting the position of the user, the movement of the user can be reflected in the display. For example, it may be structured such that the user can hide behind an object displayed on the display apparatus 30 or sneak up to an enemy. The position of the user may be substituted by the position of the remote controller 80.

### 2. Ball game

Ball games, such as tennis, air hockey and baseball, is played using a remote controller 80 in a user's possession as a tennis racket, a baseball bat or the like. The user may enjoy bodily sensation as if he/she is actually playing the sport by moving the remote controller 80 functioning as a virtual reflector and hitting with it the ball displayed on a display apparatus 30. Moreover, the surrounding scenes of the game world displayed on the other display apparatus 30 give the user a more vivid sense of being on the spot. Moreover, when used is a remote controller 80 equipped with a display screen therein, the display screen of the remote controller 80 held by the user may be used to display the moment the ball hits the racket or bat. Such an arrangement increases the sense of reality. Moreover, tricks, such as spin or slice, may be brought into the play by detecting the tilt or vertical motion of the remote controller 80 or portable game unit. Moreover, the type of ball game or the like may be selectable by operating buttons on the remote controller 80. In that case, the display control apparatus 100 receives the button operation from the remote controller 80 and reflects this operation upon the game program.

### 3. One-on-one game

Part of a wide game field is displayed on a display screen of a remote controller 80 equipped with the display screen, so that the user can move around in the game field according to user operation. This allows the remote controller 80 to function as a window through which to view a part of the wide game field. The user position may be detected and reflected in the game, so that the user can feel like actually playing the game moving around the game field. Thus, the user can enjoy not only games like tennis which have a clear distinction between one's side and the other side but also games like a battle game, in which the user can freely move around the game field, sometimes even sneaking behind the enemy.

### 4. Many-on-many game

In these games played by multiple users, each user moves about freely, carrying a remote controller 80 with a position sensor, and their positions are reflected in the user character positions in the game field, so that a game with increased sense of reality can be presented and the users can really feel like being part of the game. For example, the user, by his/her own movement, can select a party or parties to talk with, cooperate with or even attack or can move his/her position relative to the enemy.

### 5. Card game

A card exchange game using remote controllers 80 mounted with position sensors can offer the users a more natural feel of operation. Moreover, use of a tilt sensor or the like can realize a natural and easy-to-understand operation, such as handing one's card to the opponent or placing one's card on the screen of a surrounding display apparatus by tilting one's remote controller 80 toward the opponent's remote controller 80.

Fig. 14 shows an example of a display system according to the present embodiment applied to a user interface between a plurality of apparatus. Portable terminals 30f and 30g, as an example of the display apparatus, are connected to the display control apparatus 100 via the network 40. The operation will be described using an example wherein a data file displayed on the desktop of the portable terminal 30f is transferred to the portable terminal 30g.

It is assumed here that an icon 60 indicating a data file is being displayed on the display screen 34f of the portable terminal 30f and that the file can be transferred by dragging with an input device such as a mouse or a touch panel. Place the portable terminal 30f, which is the origin of transfer, and the portable terminal 30g, which is the destination of transfer, side by side, and drag the icon 60 on the portable terminal 30f in the direction of the portable terminal 30g. As the pointer 62 reaches the edge of the screen, the display control apparatus 100 instructs the portable terminal 30g, which is the display apparatus present in the direction of the drag as seen from the portable terminal 30f, to display the pointer 62. At this point, control over the pointer 62 is transferred to the portable terminal 30g, and the pointer 62 appears on the display screen 34g of the portable terminal 30g. Then drop the icon 60 on the display screen 34g of the portable terminal 30g, which is the destination of transfer. And this accomplishes the transfer of the file data.

In the conventional practice, equipment connected to the network is identified by a network address or the like, so that the network address of the equipment to which the file is to be transferred needs to be specified when the file is transferred. In contrast thereto, in the present embodiment the relations indicative of relative positions among each of the equipment are known in advance. Thus, each equipment can be identified by the current positional relation, and a more naturally operatable user interface is provided.

In the present embodiment, the display control apparatus is provided separately from the display apparatus. However, the display control apparatus may be included in any of the display apparatus. The functions of the display control apparatus may be provided in a PC, video recording equipment, game machine, home server and so forth which can process three-dimensional images. Part of or whole functions of the display control apparatus may be realized by an LSI or LSIs. If the LSI having the functions of the display control apparatus is mounted on the display apparatus, a position sensor may be provided in the LSI.

### Second embodiment

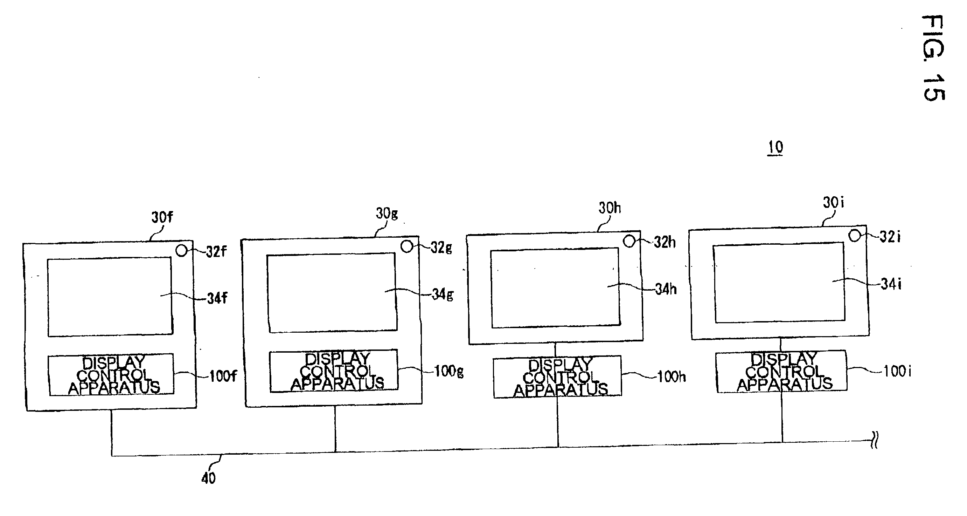

Fig. 15 shows an overall structure of a display system 10 according to a second embodiment of the present invention. The display system 10 according to the present embodiment is comprised of a plurality of display apparatus 30f, 30g, 30h and 30i and a plurality of display control apparatus 100f, 100g, 100h and 100i, which are provided for their respective display apparatus. According to the first embodiment, one display control apparatus controls and supervises the whole system collectively, whereas, according to the second embodiment, a plurality of display control apparatus operate in interlock with one another to control the display. The internal structure of each of the display apparatus 30f, 30g, 30h and 30i is the same as that of a display apparatus according to the first embodiment shown in Fig. 3, and the internal structure of each of the display control apparatus 100f, 100g, 100h and 100i is the same as that shown in Fig. 4. The display control apparatus 100 may be installed integrally with a display apparatus 30, as with the display control apparatus 100f and 100g, or separately from a display apparatus 30, as with the display control apparatus 100h and 100i.

In the display system 10 shown in Fig. 15, each of the display control apparatus 100f, 100g, 100h and 100i acquires image data and audio data through a network 40 and, according to the position information on each of the display apparatus 30f, 30g, 30h and 30i connected thereto, generates images to be displayed on each of display screen 34f, 34g, 34h and 34i of the display apparatus 80f, 30g, 30h and 30i and sounds to be outputted to a speaker. The method for acquiring position information on each of the display screen 34f, 34g, 34h and 34i and generating images to be displayed is the same as that of the first embodiment. Information on the viewpoint and the line of sight may be acquired by any one of the display control apparatus 100f, 100g, 100h and 100i and broadcast to the other display control apparatus 100f, 100g, 100h or 100i, or may be registered or saved beforehand in each of the display control apparatus 100f, 100g, 100h and 100i. In the display system 10 according to the present embodiment, processing load on the display control apparatus 100f, 100g, 100h and 100i is distributed among them, so that even for image data with high processing load, images can be generated and displayed at high speed. According to this embodiment, image data and audio data are supplied to each of the display control apparatus 100f, 100g, 100h and 100i through the network 40, but data may also be supplied by connecting a recording medium storing image data and audio data to each of the display control apparatus 100f, 100g, 100h and 100i. In such a case, the display timing may be synchronized with each display control apparatus by mutually exchanging synchronizing signals. Moreover, when a game or the like is offered by the display system 10, parameters and other information to be used in the game may be exchanged and shared by the display control apparatus 100f, 100g, 100h and 100i through the network 40.

Image data may be distributed among the display control apparatus 100f, 100g, 100h and 100i and stored by each of the display control apparatus 100f, 100g, 100h and 100i. For example, when a three-dimensional virtual reality world representing a virtual city is to be presented by the display system 10, image data on different parts of the city may be stored by their respective display control apparatus 100f, 100g, 100h and 100i, and the virtual city may be constructed as a whole. In such a case, at the start of image reproduction, each of the display control apparatus 100f, 100g, 100h and 100i may supply image data held by itself to the other display control apparatus 100f, 100g, 100h or 100i, so that all the display control apparatus 100f, 100g, 100h and 100i acquire the whole image data, or a display control apparatus 100 storing image data to be displayed may supply the image data to the other display control apparatus in interlock with the movement of the user. Thereby, not only processing load may be distributed but the storage area holding the image data may also be distributed, so that the amount of memory to be stored in and mbunted on each display control apparatus 100 may be reduced.

### Third embodiment

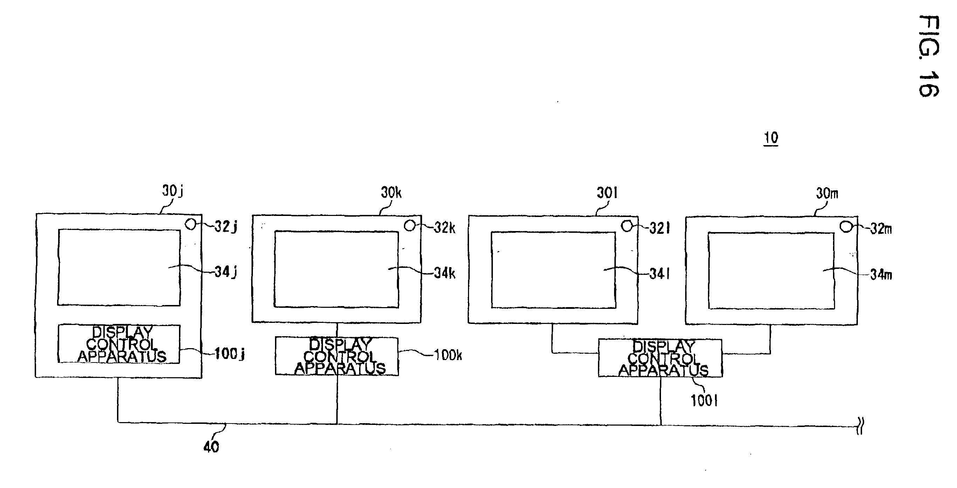

Fig. 16 shows an overall structure of a display system 10 according to a third embodiment of the present invention. The display system 10 according to the present embodiment is comprised of a plurality of display control apparatus and a plurality of display apparatus, with a display apparatus 30j connected to a display control apparatus 100j, a display apparatus 30k connected to a display control apparatus 100k, and a display apparatus 301 and a display apparatus 30m connected to a display control apparatus 100l. In the display system 10 according to this embodiment, there is a mixed presence of the display control apparatus 100l collectively controlling a plurality of display apparatus 30 as shown in the first embodiment and the display control apparatus 100j and 100k individually controlling a single display apparatus as shown in the second embodiment. The internal structure of each of display apparatus 30j, 30k, 30l and 30m is the same as that of a display apparatus according to the first embodiment shown in Fig. 3, and the internal structure of each of display control apparatus 100j, 100k and 100l is the same as that shown in Fig. 4.

In the display system 10 shown in Fig. 16, each of display control apparatus 100j, 100k and 100l acquires image data and audio data through a network 40 and, according to the position information on each of the display apparatus 30j, 30k, 30l and 30m connected thereto, generates images to be displayed on each of the display screen 34j, 34k, 34l and 34m of the display apparatus 30j, 30k, 30l and 30m and sounds to be outputted to the speaker. More specifically, the display control apparatus 100j generates images for the display apparatus 30j, the display control apparatus 100k generates images for the display apparatus 30k, and the display control apparatus 100l generates images for the display apparatus 301 and 30m. The method for acquiring position information on each of the display screen 34j, 34k, 34l and 34m and generating images to be displayed is the same as that of the first embodiment. Information on the viewpoint and the line of sight may be acquired by any one of the display control apparatus 100j, 100k and 100l and broadcast to the other display control apparatus 100j, 100k or 100l, or may be registered or saved beforehand in each of the display control apparatus 100j, 100k and 100l. In the display system 10 according to the present embodiment, not only processing load on the display control apparatus 100 can be distributed among a plurality of display control apparatus 100j, 100k and 100l but also a system can be structured flexibly to comply with the environment of a user.

### Fourth to Sixth embodiments

The first to third embodiments offer more natural user interface. In line therewith, technologies by which to provide user interface devices having the surface superior in terms of the sense of touch will be described in fourth to sixth embodiments below. As the remote controller 80 described in the first to third embodiments above, a user interface device according to the fourth or fifth embodiment described below may be utilized, for example. Moreover, as the display apparatus 30 according to the first to third embodiments described above, a display apparatus according to the sixth embodiment described below may be utilized, for example.

The present embodiments according to the forth to sixth embodiments relate to user interface devices and display apparatus, and they particularly relate to a user interface device in which input can be made by means of hands and/or fingers, and a display apparatus where the dirt like fingerprints is unlikely to be adhered or a display apparatus which can be even free from such dirt adhered thereto.

In addition to the keyboards and mice serving as standard operating devices, user interface devices realizing the input by fingers with more natural and easier operation are increasingly used in recent years. As typical examples, there are touch-input type devices used in ATMs (automatic teller machines), portable information terminals and the like. In such devices, the transparent panel-like touch-input device is provided on the display screen such as LCD, and the user selects an item while referring to the displayed screen and touches the panel on a predetermined area so as to input characters or the like. In this connection, the following reference serves well to illustrate such devices.

Jun Rekimoto, "SmartSkin : An Infrastructure for Freehand Manipulation on Interactive Surfaces," <URL: http://www.csl.sony.co.jp/person/rekimoto/papers/chi02.pdf> Internet searched on August 28, 2002.

When operating such a device, the user makes inputs by directly touching the transparent plate which constitutes part of the touch-input device or a protective film of the device. However, the transparent plate or protective film is usually made of a glass or resin such as PET(polyethylene terephthalate). Thus, the excessive adherence is often caused between the finger and the plate, so that the dirt such as fingerprints is then adhered thereto and causes an adverse effect on the visibility of a display. Not only the visibility problem but also the dirt problem makes some users feel it uncomfortable using the bank's ATM that many and unspecified persons use. Moreover, when doing operation like a "drag" by which the surface of the transparent plate or the like is touched and dragged by the finger, the finger tends to be caught on the surface to hinder the accurate operation in the conventional device. Moreover, the sense of touch felt by the fingers due to the excessive adherence with the surface of the device is not a comfortable one. Moreover, even in the display apparatus with a display function only and without any input function, the visibility of the display might deteriorate due to fingerprint stains or the like.

An object of the present embodiments is to provide a user interface device having satisfactory visibility and operatability where touch input can be made with excellent sense of touch. Another object thereof is to provide a user interface device that reduces the psychological resistance of users even the device is used by many and unspecified persons. Still another object thereof is to provide user interface device and display apparatus that reduces dirt or the like appearing on the surface.

A preferred embodiment relates to a user interface device. This device includes: a display unit; and an input device, provided in front of the display unit, which receives and effects an input by a user's touching on a surface thereof while the user sees through the display unit, wherein a transparent layer with a fine concave and convex shape formed on a surface thereof by fixing transparent particles is provided and pasted in front of the input device.

A user interface device according to another preferred embodiment is characterized in that in front of the input device there is pasted and provided a layer formed in a manner such that a plurality of transparent fine fibers are flocked.

Still another preferred embodiment relates to a display apparatus. This display apparatus includes: a display unit and a transparent layer, whose surface is of a fine concave and convex shape, provided in front of the display unit and formed in a manner such that transparent particles are fixed thereto.

A display apparatus according to still another preferred embodiment includes: a display unit; and a layer, provided in front of the display unit, formed in a manner such that a plurality of,transparent fibers are flocked.

On the surface of these user interface devices and the display apparatus, there are formed fine concave and convex shapes or there are flocked a plurality of fine fibers, so that the adherence caused between the surface and the finger can be minimized.

### Fourth embodiment

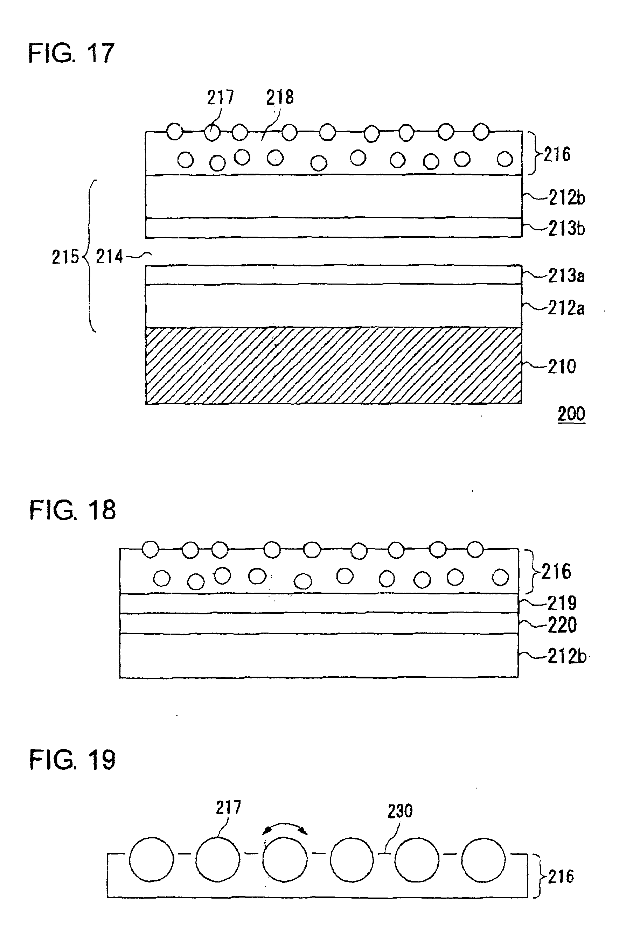

Fig. 17 illustrates a cross-sectional view of a user interface device 200. A display unit 210 is disposed on a surface of a transparent input device 215 whereas a concavo-convex layer 216 is arranged on the other surface thereof. The concavo-convex layer 216 includes transparent particles 217 fixed by a transparent binder 218, and the surface of the concavo-convex layer 216 is of a concave and convex shape. In other words, the concavo-convex layer 216 has a fine rugged surface. The transparent input device 215 is comprised of two transparent plates 212a and 212b disposed counter to each other, where the transparent plates 212a and 212b are provided with transparent conductive thin films 213a and 213b inside thereof, respectively. The two transparent plates 212a and 212b are fixed at positions not shown, via an insulating spacer. A very small clearance 214 is provided between the two transparent conductive thin films 213a and 213b, so that non-contact state is realized and retained. It is to be noted that the transparent conductive thin films 213a and 213b may be ITO (Indium-Tin Oxide) films formed by using a sputtering method, for example.

By touching the surface of the concavo-convex layer 216 while seeing through an image on the display unit 210, a user operates the user interface device 200. When the user presses a predetermined spot on the transparent plate 212b of the concavo-convex layer 216 side via the concavo-convex layer 216, the transparent conductive thin film 213a comes in contact with the transparent conductive thin film 213b at a predetermined position, and the two transparent conductive thin films 213a and 213b become conductive, thus generating signals. Thanks to the concave and convex shape of the concavo-convex layer 216, the adherence between fingers and the surface can be suppressed to the minimum. As a result thereof, fingerprints are less likely to be adhered thereto, thus achieving the objective of the present embodiment.

In order to stably achieve effects produced by the present embodiments, it is preferable that an average radius of a particle in the transparent particles 217 is approximately 1 - 500 µm. Moreover, it is further preferable that the average radius of a particle is approximately 5 - 50 µm in order to achieve further satisfactory tactile sense. Thereby, a suede-like sense of touch can be obtained on the surface of the concavo-convex layer 216, so that there is provided a unique device realizing a desirable sense of touch when operating the device.

Resin-made beads may be used as the transparent particles 217. The resin of urethane type, resin of acrylic type, resin of silicon type, resin of melamine type and so forth may serve as material for the beads. For example, urethane beads UB200 (product of Jujo Chemical Co.,Ltd.) may be utilized. Such resin-made beads can realize the satisfactory sense of touch on the surface of the concavo-convex layer 216.

The concavo-convex layer 216 may be formed by the following method. The transparent binder 218 made of resin of polyester urethane type and the like is dissolved in, for example, a solvent of toluene : ethyl acetate : methyl ethyl ketone = 2: 1: 1 (weight ratio), and the transparent particles 217 are dispersed into this solvent so as to prepare coating liquid. At this time, the compounding ratio of the transparent particle 217, transparent binder 218 and solvent is, for example, 15:20:65 (weight ratio). In a case when PET(polyethylene terephthalate) or resin-made material is used as the transparent plate 212b, the known methods such as roll coating method, knife coating method and dye coating method may be used and the coating liquid is directly applied to the transparent plate 212b and dried so as to form the concavo-convex layer 216. An amount of coating is preferably approximately 15 - 50 g/m². Thereby, the concavo-convex layer 216 having a sufficiently fine rugged surface can be obtained.

There may be cases where the transparent plate 212b in the concavo-convex 216 side is made of glass, or the transparent plate 212b is already integrated, as part, into the transparent input device 215. In such a case where it is difficult to directly apply the coating liquid to the transparent plate 212b, the following method may be employed. Referring to Fig. 18, after the concavo-convex layer 216 is formed, according to the above-described method, on a surface of a resin sheet 219 which is solvent resistant and made of polypropylene or the like, the other surface of the resin sheet 219 and the transparent plate 212b of the concavo-convex layer 216 side are glued and fixed together via an adhesion layer 220. For example, a transparent adhesive such as one of polyurethane type may be used as the adhesion layer 220.

The type of the display unit 210 shown in Fig. 17 is not limited, and various types of display units such as a CRT display, liquid crystal display, plasma display, electroluminescent display, laser display and the like may be used as the display unit 210. There has been shown the transparent input device 215 where the two transparent plates 212a and 212b are provided with transparent conductive thin films 213a and 213b inside thereof, respectively. However, the transparent input device is not limited thereto, and other type of input device may be used. For example, a sensor disclosed in the paper entitled "SmartSkin : An Infrastructure for Freehand Manipulation on Interactive Surfaces" written by Jun Rekimoto may be used as the input device. This sensor includes transmitter/receiver electrodes, comprised of urethane-covered copper wires arranged in the mesh, and a signal processing circuit. When the hands and fingers are in the proximity to this sensor, the positions of hands and fingers can be detected two-dimensionally by measuring the charged capacitance thereof. This information is utilized as an input signal, so that this sensor can be utilized as an input device.

In the present embodiment, there has been described an example where particles made of resin are used as transparent particles. However, the transparent particles are not limited thereto, and particles made of glass or the like may be used. It is to be noted that the transparent input device 215 as shown in Fig. 17 may be omitted and the concavo-convex layer 216 may be provided directly on the display unit 210. In such a case, realized is display apparatus where dirt such as fingerprints is unlikely to be adhered thereto.

In order that as much as the light radiated from the display unit 210 can transmit through the concavo-convex layer 216, it is preferable that the transparent particle 217 is made of material having a low refractive index and that the transparent binder 218 is made of material having a high refractive index. For example, the transparent particle 217 may be made of material such as an optical glass having a low refractive index (artificial fluorite) whose refractive index is approximately 1.43 whereas the transparent binder 218 may be made of material such as a photo-curing resin whose refractive index is approximately 1.63. If the surface is treated by a concavo-convex treatment only, concave portions and convex portions exist mixedly and randomly, so that the light is scattered in the multiple directions and the image viewed is possibly blurry and not as sharp as it should be. However, according to the present embodiment where the concavo-convex layer 216 is structured by dispersing the transparent particles 217 of the substantially identical particle size, there is provided a structure in which the surface is covered over with the plurality of similar lens. Thus, if the refractive index of the transparent particle 217 is appropriately set, the scattering of the light can be suppressed to the minimum and both the desirable sense of touch and the clear display can be obtained at the same time.

As a modified example of the fourth embodiment, the transparent particles 217 may be held by a mesh-like holding unit 230 in a freely rotatable manner as shown in Fig. 19, instead of the structure where the transparent particles 217 are fixed by the transparent binder 218. Thereby, the user can enjoy smooth slip sense of touch when touching the surface of the user interface device 200, so that a drag operation or the like can be smoothly carried out.

### Fifth embodiment

A user interface device according to a fifth embodiment of the present invention is characterized in that an optical fiber is used as the above-described transparent fine fiber.

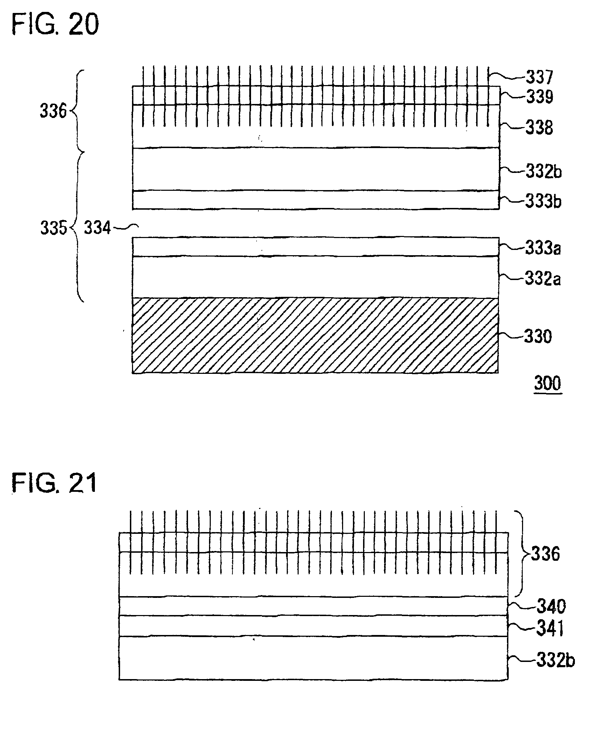

Fig. 20 illustrates a cross-sectional view of a user interface device 300 according to the fifth embodiment. A display unit 330 is disposed on a surface of a transparent input device 335 whereas an optical fiber layer 336 is disposed on the other surface of the transparent input device 335. The optical fiber 337 is embedded vertically with respect to an adhesion layer 338, so that the multiplicity of optical fibers 337 stand on the surface of the optical fiber layer 336. A light shielding layer 339 is provided on the adhesion layer 338 for a reason described later. The transparent input device 335 is comprised of two transparent plates 332a and 332b disposed counter to each other, where the transparent plates 332a and 332b are provided with transparent conductive thin films 333a and 333b inside thereof, respectively. The two transparent plates 332a and 332b are fixed at positions not shown, via an insulating spacer. A very small clearance 214 is provided between the two transparent conductive thin films 333a and 333b, so that the non-contact state is realized and retained.

The optical fiber 337 functions as a display pixel when the light irradiated from the display unit 330 is permeated upward as shown in Fig. 20. Thus, the user can view the same image on the surface of the optical fiber layer 336 as that in the display unit 330. By touching the surface of the optical fiber layer 336 while seeing through an image on the display unit 330, the user operates the user interface device 300. When the user presses a predetermined spot on the transparent plate 332b via the optical fiber layer 336, the transparent conductive thin film 333a comes in contact with the transparent conductive thin film 333b at a predetermined position, and the two transparent conductive thin films 333a and 333b become conductive, thus generating signals. Since a plurality of optical fibers 337 are flocked on the surface, the excessive adhesion is not caused between the surface and a fingertip at the time of operating the user interface device 300. As a result thereof, fingerprints or the like are scarcely adhered, thus achieving the objective of the present embodiment.

In order to stably achieve effects produced by the present embodiments, it is preferable that a diameter of the optical fiber 337 is approximately 100 - 1000 µm. Moreover, it is further preferable that the diameter of the optical fiber is approximately 100 - 500 µm in the light of displaying high-quality images by the optical fiber layer 336. The Eska (registered trademark) CK-10, which is a product of Mitsubishi Rayon Co.,Ltd., and the like may be used as the optical fibers. Though the length of the optical fiber 337 is not specifically set forth, it may be approximately 0.5 to 5 mm, for example.

In order to obtain high-resolution images in the optical fiber layer 336, it is necessary that the optical fibers 337 be sufficiently and densely crowded and then flocked in that state. As a method to realize this, an electrostatic flocking machine CP-40 which is a product of Eishin Kucho Co.,Ltd. may be used, for example. First, the polyvinyl acetate resin emulsion adhesive or the like is coated on the transparent plate 332b so as to form the adhesion layer 338. Before the adhesion layer 338 stiffens, the optical fibers 337 are flocked by the electrostatic flocking machine. This is a method in which the optical fibers 337 are flocked vertically all over the surface of the adhesion layer 338 by use of the static electricity. The thus formed optical fiber layer 336 has the same comfortable sense of touch on the surface as a carpet.

As shown in Fig.20, a light shielding layer 339 may be provided on the adhesion layer 338. By providing the light shielding layer 339 as shown in Fig. 20, the light leaked from a space between the optical fibers 337 is shut off, so that sharper images are obtained. The light shielding layer 339 can be provided, for example, by spraying a shielding coating material on the adhesion layer 338 and drying it. However, since the shielding coating material is also adhered to the tip of the optical fibers 337, the tip needs to be cut off after the drying.

The optical fiber layer 336 is not necessarily provided directly onto the transparent plate 332b of the optical fiber 336 side. Instead, for example, after the optical fiber layer 336 is provided on a surface of a resin sheet 340 which is made of polypropylene or the like, the other surface of the resin sheet 340 and the transparent plate 332b of the optical fiber layer 336 side may be fixed together via the adhesion layer 341 as shown in Fig. 20.

Although the optical fiber is used as a transparent fine fiber in the present embodiment, the fiber of polyester type such as PET may be used, for example. Moreover, the tactile sense can be obtained improved by performing a split processing on the tip of the fine fiber as instructed in the method, for example, disclosed in the Japanese Patent Laid-Open No. Hei2-6648. Similar to the first embodiment, the type of the display unit 330 and transparent input device 335 shown in Fig. 20 is not restricted to any specific one, and various types of display units and transparent input devices may be used. Referring to Fig. 20, the transparent input device 335 may be omitted, so that the optical fiber layer 336 may be provided directly on the display unit 330. In this case, realized is a display apparatus where dirt or foreign material such as fingerprints is unlikely to be adhered to the surface thereof.

As a modification to the present embodiment, a television stone (ulexite) or an artificial television stone using optical fibers may be provided in place of the optical fiber layer 336. By adopting the television stone or artificial television stone, the images can be displayed in such a manner that the images emerge on and rise to the surface of the television stone or artificial television stone, instead of on the surface of the display unit 330. By utilizing and implementing this structure, a three-dimensional button, for example, may be arranged on an image screen, so that some special effects can be obtained. Unlike the optical fiber layer 336, the television stone and the artificial television stone have hard surface and thus they are suitable for an occasion where they can serve as buttons or the like.

### Sixth embodiment

A display apparatus according to a sixth embodiment is characterized in that optical fibers are used as the transparent fine fibers, and the tip thereof is fixed in a state such that the tip is penetrated through a flexible sheet-like member.

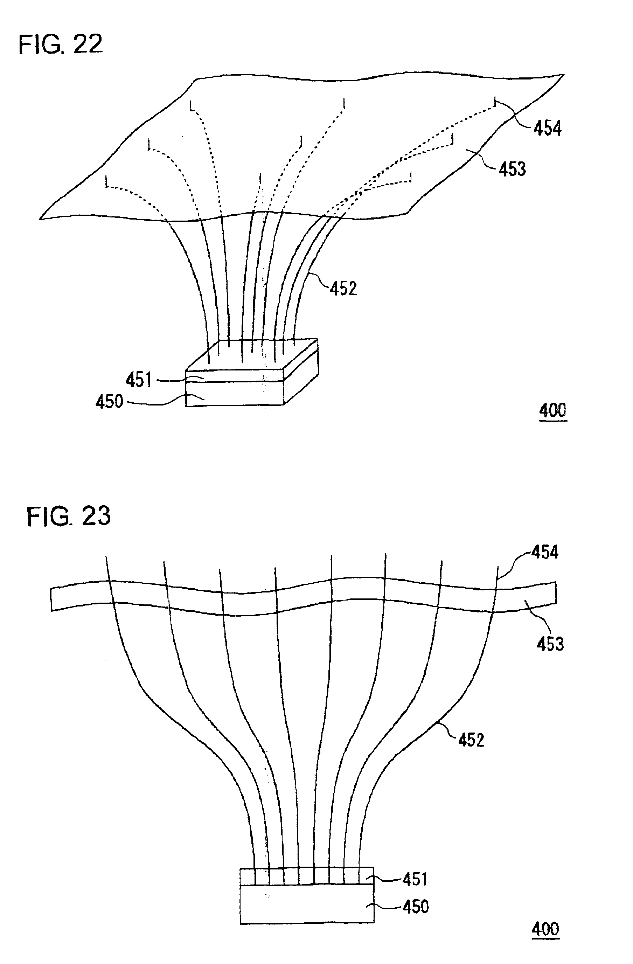

Fig. 22 and Fig. 23 are a perspective view and a cross-sectional view of a display apparatus 400, respectively. One end of the optical fiber 452 is fixed to a display unit 450 via an adhesion layer 451. The other end of the optical fiber 452, which is referred to as an optical fiber tip 454, penetrates through a sheet-like member 453 having the flexibility. The optical fiber 452 and the sheet-like member 453 are fixed in this state.

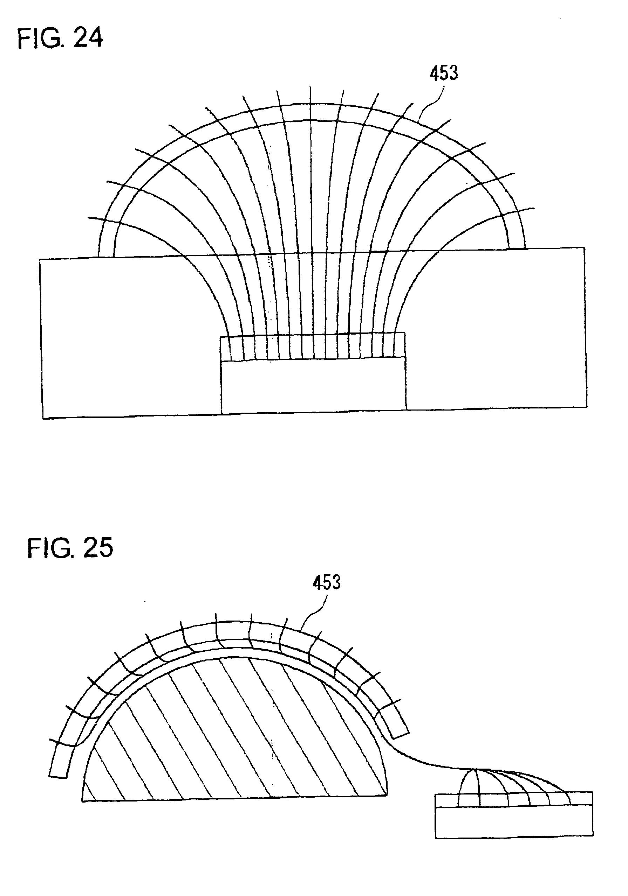

The optical fiber 452 functions as a display pixel when the light irradiated from the display unit 450 is permeated upward as shown in Fig. 23. Thus, the user can view the same image on the surface of the sheet-like member 453 as that in the display unit 450. Moreover, a display apparatus having variously shaped display screens may be realized by deforming the sheet-like member 453. For example, the sheet-like member 453 may be arranged in a state being bent as shown in Fig. 24, thus realizing a semi-spherical display screen. Moreover, as shown in Fig. 25, for example, the sheet-like member 453 may be arranged in a such manner that it covers the surface of an object having a semi-spherical shape. Moreover, this structure may be applied to stuffed dolls, cushion and the like, so that there can be provided a three-dimensional display apparatus having a smooth sense of touch and full of flexibility.

Since the multiplicity of the optical fiber tips 454 are projected on the sheet-like member 453 as shown in Fig. 22 and Fig. 23, they do not adhere to fingers when touched by the fingers. Thus, the fingerprints or the like can be prevented from being adhered thereto, achieving the objective of the present embodiment.

The display unit 450, the adhesion layer 451 and the optical fiber 452 in this sixth embodiment may be similar to those used in the firth embodiment above. The length of the optical fiber 452 is not specifically set or restricted, and it can be selected as appropriate according to the use or purpose thereof. For example, the resin film such as a polyethylene or material such as cloth having flexibility can be used as the sheet-like member 453. In order to improve the image contrast, it is preferable that a shading treatment such as applying coating material be performed on the above-mentioned material.

If the length of the optical fiber 452 is relatively large, it is difficult to utilize the electrostatic flocking scheme as shown in the fifth embodiment above. In such a case, the optical fibers 452 are fixed, one by one, by using an exclusive-use jig or the like before the adhesion layer 451 stiffens. The other end of the optical fiber 452 is penetrated through the sheet-like member 453 so that the optical fiber tip 454 is projected above the sheet-like member 453 by, for example, approximately 0.5 to 5 mm. In such a state, the optical fiber 452 and the sheet-like member 453 are fixed with an adhesive or the like. The above-described inputting functions may be added to these display apparatus, so that such display apparatus with the added functions can serve as the user interface device.

The present invention has been described based on the embodiments which are only exemplary. It is understood by those skilled in the art that there exist other various modifications to the combination of each component and process described above and that such modifications are encompassed by the scope of the present invention.

## Claims

1. A display system (10), **characterized in that** it includes:
a plurality of display apparatuses (30); and
at least one display control apparatus (100),
said display apparatus (30) includes:
a detector (32) which detects a position of said display apparatus (30); and
a notifying unit (37) which notifies said display control apparatus (100) of information indicative of the position of said display apparatus (30) detected by said detector (32), and
said display control apparatus (100) includes:
a position information acquiring unit (110) which acquires from said notifying unit (37) the information indicative of the position of said display apparatus (30); and
an image generator (160) which generates images to be displayed on said display apparatus (30), based on the information, indicative of the position of said display apparatus (30), acquired by said position information acquiring unit (110), and which supplies the thus generated images to said display apparatus (30),
wherein the plurality of display apparatuses (30) display images acquired from said image generator (160).

2. A display system (10) according to Claim 1, **characterized in that** in order that image data be displayed in a manner such that the plurality of display apparatuses (30) are interlocked to one another, said image generator (160) generates images to be displayed on the respective image display apparatuses (30), from the image data.

3. A display system (10) according to Claim 1 or 2,
**characterized in that** the image data represents a three-dimensional space.

4. A display system (10) according to Claim 3, **characterized in that** said display control apparatus (100) further includes a viewpoint acquiring unit (130) which acquires a viewpoint position of a user (20), and
based on a position of said display apparatus (30) relative to the viewpoint position of the user (20), said image generator (160) generates images which must be seen in the respective directions of said display apparatuses (30) from viewpoints provided in the three-dimensional space.

5. A display system (10) according to any one of Claims 1 to 4, **characterized in that** it further includes a plurality of speakers (36), and
said display control apparatus (100) further includes an audio generator (170) which generates audio to be outputted from a speaker (36) based on information indicative of a position of said speaker (36) and which transmits the generated audio to said speaker (36).

6. A display system (10) according to any one of Claims 1 to 5, **characterized in that** it further includes an input device (80) which inputs a user's instruction to said display apparatus (30) or said display control apparatus (100), and
a display apparatus (30) or a display control apparatus (100), disposed in a direction that said input device (80) faces, acquires a signal from said input device (80) and receives the user's instruction.

7. A display system (10) according to any one of Claims 1 to 5, **characterized in that** it further includes an input device (80) which inputs a user's instruction to said display apparatus (30) or said display control apparatus (100), and said display control apparatus (100) collectively acquires a signal from said input device (80) and transmits, as appropriate, the user's instruction to said display apparatus (30).

8. A display system (10) according to Claim 6 or 7, **characterized in that** an interface screen which supports input of the user's instruction from said input device (80) is displayed on at least one of said plurality of display apparatuses (30).

9. A display system (10) according to Claim 8, **characterized in that** the interface screen is displayed on a display apparatus (30) disposed in a direction that said input device (80) faces.

10. A display system (10) according to any one of Claims 6 to 9, **characterized in that** said input device (80) has a display screen to display an interface screen that supports input of the user's instruction.

11. A display system (10) according to Claim 10, **characterized in that** said input device (80) includes an execution unit which displays the interface screen and executes a program to receive the input of the user's instruction.

12. A display system (10) according to Claim 11, **characterized in that**, prior to receiving the input of the user's instruction, said input device (80) acquires the program from said display control apparatus (100) or said display apparatus (30).

13. A display system (10) according to any one of Claims 6 to 12, **characterized in that** said display apparatus (30), said display control apparatus (100) or said input device (80) includes an indicator which indicates to a user (20) an apparatus intended to be operated by said input device (80).

14. A display control apparatus (100), **characterized in that** it comprises:
a position information acquiring unit (110) which acquires information indicative of positions of a plurality of display apparatuses (30);
an image generator (160) which generates images to be displayed respectively on said plurality of display apparatuses (30), based on the information, indicative of the positions of said display apparatuses (30), acquired by said position information acquiring unit (110).

15. A display apparatus (30), **characterized in that** it comprises:
a detector (32) which detects a position of the display apparatus (30);
a notifying unit (37) which notifies a display control apparatus (100) of information indicative of the position of the display apparatus (30) detected by said detector (32); and
a display unit (38) which acquires and displays images generated by the display control apparatus (100) according to the position.

16. A display method **characterized in that**, at the time when image data expressed in a form surrounding a user (20) are displayed by a plurality of display apparatuses (30) interspersed, information indicative of positions of the respective display apparatuses (30) are acquired as appropriate, and images that must be seen in the directions of the respective display apparatuses (30) from the user (20) are generated and displayed on the display apparatuses (30).

17. A user interface device (200), **characterized in that** it includes:
a display unit (210); and
an input device (215), provided in front of said display unit (210), which receives and effects an input by a user's touching on a surface thereof while the user sees through the display unit (210),
wherein a transparent layer (216) with a fine concave and convex shape formed on a surface thereof by fixing transparent particles (217) is provided and pasted in front of said input device (215).

18. A user interface device (200) according to Claim 17, **characterized in that** the transparent particles (217) are made of resin.

19. A user interface device (300), **characterized in that** it includes:
a display unit (330); and
an input device (335), provided in front of said display unit (330), which receives and effects an input by a user's touching on a surface thereof while the user sees through the display unit (330),
wherein, in front of the input device (335), there is pasted and provided a layer (336) formed in a manner such that a plurality of transparent fine fibers (337) are flocked.

20. A user interface device (300) according to Claim 19, **characterized in that** the fine fiber (337) is an optical fiber.

21. A display system (10), **characterized in that** it includes:
a plurality of display apparatuses (30); and
at least one display control apparatus (100),
said display apparatus (30) including:
a notifying unit (37) which notifies characteristic information regarding display or audio output of the display apparatus (30) to the display control apparatus (100),
said display control apparatus (100) including:
a characteristic information acquiring unit (112) which acquires the characteristic information from the notifying unit (37); and
a characteristic information determining unit (190) which determines a characteristic regarding the display or audio output of the plurality of display apparatuses (30) based on the characteristic information of each display apparatus (30) acquired by the characteristic information acquiring unit (112), and notifies the determined characteristic to each display apparatus (30), so that the characteristic regarding the display or audio output of the plurality of display apparatuses (30) added in the display system (10) might be unified,
and wherein the plurality of display apparatuses (30) respectively change their own characteristic to the characteristic notified by the characteristic information determining unit (190).
